# EUROPÄISCHE PATENTSCHRIFT

(11) **EP 3 875 003 B1**
(45) Veröffentlichungstag und Bekanntmachung des Hinweises auf die Patenterteilung: **07.05.2025**
(21) Anmeldenummer: 20161437.7
(22) Anmeldetag: 06.03.2020
(51) Int. Cl.: A47J 36/10, A47J 43/07, A47J 43/046

(54) **ZUBEREITUNGSGEFÄSS MIT EINER VERRIEGELUNGSEINRICHTUNG**
PREPARATION CONTAINER COMPRISING A LOCKING DEVICE
RÉCIPIENT DE PRÉPARATION DOTÉ D'UN DISPOSITIF DE VERROUILLAGE

(43) Veröffentlichungstag der Anmeldung: 08.09.2021
(73) Patentinhaber: Vorwerk & Co. Interholding GmbH, 42275 Wuppertal (DE)
(72) Erfinder: Schmitz, Kevin, 40599 Düsseldorf (DE); Bayard, Christian, 58456 Witten (DE); Jansen, Sebastian, 44803 Bochum (DE)
(74) Vertreter: Müller, Enno

(56) Entgegenhaltungen:
- EP-A1- 2 371 251
- EP-B1- 2 813 165
- WO-A1-2019/012208
- US-A1- 2014 021 278
- US-A1- 2016 287 011

## Beschreibung

### Gebiet der Technik

Die Erfindung betrifft ein Zubereitungsgefäß zum Verbinden mit einem Aufnahmebereich eines Basisgerätes einer elektromotorisch betriebenen Küchenmaschine, wobei das Zubereitungsgefäß einen Topf, einen mit dem Aufnahmebereich verbindbaren Topffuß und einen eine Topföffnung des Topfes verschließenden Deckel aufweist, wobei weiter das Zubereitungsgefäß eine Verriegelungseinrichtung mit einem Verriegelungselement zum Verriegeln des Topfes mit dem Deckel aufweist, wobei der Topffuß mindestens ein Betätigungselement zur Betätigung der Verriegelungseinrichtung aufweist, wobei das Betätigungselement so an dem Topffuß angeordnet ist, dass dieses von einer korrespondierenden Betätigungseinrichtung des Aufnahmebereiches der Küchenmaschine betätigbar ist.

Des Weiteren betrifft die Erfindung eine elektromotorisch betriebene Küchenmaschine, insbesondere ein Mixgerät, mit einem Basisgerät und einem mit einem Aufnahmebereich des Basisgerätes verbindbaren Zubereitungsgefäß, welches einen Topf und einen eine Topföffnung verschließenden Deckel aufweist.

### Stand der Technik

Zubereitungsgefäße und Küchenmaschinen mit einem Zubereitungsgefäß sind im Stand der Technik bekannt. Das Gehäuse der Küchenmaschine kann beispielsweise einen Gefäßaufnahmebereich aufweisen, in welchen das Zubereitungsgefäß einsetzbar ist, wobei der Gefäßaufnahmebereich vorzugsweise zumindest bezogen auf einen Teilbereich formkorrespondierend zu dem Zubereitungsgefäß so ausgebildet ist, dass das Zubereitungsgefäß im Zuge des Verbindens mit dem Gefäßaufnahmebereich sowohl in Bezug auf eine vertikale Richtung, als auch in Bezug auf eine Umfangsrichtung des Zubereitungsgefäßes ausgerichtet werden kann.

In dem Aufnahmebereich kann des Weiteren beispielsweise eine Rotationswelle angeordnet sein, welche zum Antrieb eines sich in dem Zubereitungsgefäß befindenden Rührwerkes dient. Das Rührwerk wird zur Zubereitung von Speisen über einen küchenmaschinenseitigen Elektromotor angetrieben. Um bei einem Betrieb der Küchenmaschine, insbesondere des Rührwerks, ein Herausspritzen von Lebensmitteln aus dem Zubereitungsgefäß zu vermeiden, weist das Zubereitungsgefäß einen Deckel auf, welcher mittels einer Verriegelungseinrichtung auf dem Topf verriegelbar ist.

Eine im Stand der Technik bekannte Küchenmaschine mit einer Verriegelungseinrichtung für den Deckel des Zubereitungsgefäßes zeigt beispielsweise die Patentschrift EP 2 813 165 B1. Die Verriegelungseinrichtung weist zwei einen Topfrand sowie Deckelrand übergreifende Verriegelungsteile auf, die als um eine im Wesentlichen horizontale Achse rotierende Verriegelungswalzen ausgebildet sind. Die Verriegelungswalzen können von einer Freigabestellung in eine Verriegelungsstellung und umgekehrt rotiert werden.

Obwohl sich die vorgenannte Verriegelungseinrichtung zur sicheren Verriegelung des Deckels auf dem Topf bewährt hat, ist diese Ausbildung daran gebunden, dass mit einem bestimmten Basisgerät der Küchenmaschine auch ein bestimmtes, insbesondere mit der Höhe der Verriegelungswalzen übereinstimmendes, Zubereitungsgefäß verwendet wird. Dadurch ist es gegebenenfalls nicht möglich, verschiedene Zubereitungsgefäße in Verbindung mit der Küchenmaschine zu benutzen, insbesondere Zubereitungsgefäße mit zueinander verschiedenen Höhen.

Des Weiteren ist aus der Veröffentlichung WO2019/012208A1 eine Küchenmaschine mit einem Aufnahmebereich für ein Zubereitungsgefäß bekannt, wobei der Aufnahmebereich der Küchenmaschine eine Betätigungseinrichtung für eine an dem Zubereitungsgefäß angeordnete Verriegelungseinrichtung aufweist, die einen Deckel des Zubereitungsgefäßes verriegelt.

### Zusammenfassung der Erfindung

Ausgehend von dem vorgenannten Stand der Technik ist es daher Aufgabe der Erfindung, ein Zubereitungsgefäß für eine Küchenmaschine zu schaffen, welches einerseits eine Verriegelung des Deckels mit dem Topf ermöglicht, und andererseits unabhängig von einer Aufbauhöhe des Zubereitungsgefäßes mit einem Basisgerät der Küchenmaschine verbindbar ist.

Zur Lösung der vorgenannten Aufgabe wird vorgeschlagen, dass das Verriegelungselement ein rotierbar an dem Topf oder dem Deckel gelagerter, die Topföffnung, in einem mittels des Deckels verschlossenen Zustand, umgebender Verriegelungsring ist, wobei dem Verriegelungselement eine Antriebseinrichtung zugeordnet ist, welche eingerichtet ist, das Verriegelungselement um die Topföffnung zu rotieren.

Die Verriegelungseinrichtung, die dem Verriegeln des Deckels mit dem Topf dient, befindet sich an dem Zubereitungsgefäß selbst. Damit erübrigt sich eine an der Küchenmaschine ausgebildete Verriegelungseinrichtung, welche zur ordnungsgemäßen Verriegelungsfunktion eine bestimmte Geometrie, insbesondere Höhe, des Zubereitungsgefäßes voraussetzen würde. Das erfindungsgemäße Zubereitungsgefäß ist durch das an dem Topffuß bereitgestellte Betätigungselement so ausgebildet, dass die Verriegelungseinrichtung des Zubereitungsgefäßes mittels einer Betätigungseinrichtung der das Zubereitungsgefäß aufnehmenden Küchenmaschine betätigt werden kann. Vorzugsweise befindet sich das Betätigungselement unterseitig an dem Zubereitungsgefäß, so dass dieses bei Verbinden des Zubereitungsgefäßes mit dem Aufnahmebereich des Basisgerätes in Kontakt mit einem Element der küchenmaschinenseitigen Betätigungseinrichtung kommt. Gemäß einer Ausbildung kann die Verriegelungseinrichtung als Verriegelungselement beispielsweise korrespondierend an dem Topf und dem Deckel ausgebildete Bajonettverschlusselemente aufweisen und an einem der Bajonettverschlusselemente z. B. eine Verzahnung bereitstellen, in welche ein Teilbereich eines Antriebselementes eingreift, um die beiden Bajonettverschlusselemente relativ zueinander zu rotieren. Der Bajonettverschluss kann dabei durch eine rampenförmige Ausbildung eines der korrespondierenden Bajonettverschlusselemente eine axiale Verlagerung des Deckels in Richtung des Topfes, so dass der Deckel auf den Rand der Topföffnung gedrückt wird und somit ein festes und insbesondere fluiddichtes Verschließen des Zubereitungsgefäßes erfolgt.

Wesentlich ist im Sinne der Erfindung jedenfalls, dass die Verriegelungseinrichtung zum Verriegeln des Deckels mit dem Topf ausschließlich dem Zubereitungsgefäß zugehörig ist und lediglich an dem Topffuß des Zubereitungsgefäßes eine Schnittstelle angeordnet ist, die eine Betätigung der Verriegelungseinrichtung des Zubereitungsgefäßes durch eine Betätigungseinrichtung eines Basisgerätes einer Küchenmaschine erlaubt. Die Schnittstelle befindet sich vorzugsweise unter dem Zubereitungsgefäß, d. h. im Bereich einer im Wesentlichen horizontalen Kontaktfläche zwischen dem Aufnahmebereich des Basisgerätes und dem Topffuß des Topfes des Zubereitungsgefäßes, so dass das Zubereitungsgefäß sehr unterschiedlich geformt sein kann, insbesondere in Bezug auf dessen Höhe und/oder Durchmesser. Eine Kompatibilität zwischen verschiedenen Zubereitungsgefäßen und verschiedenen Basisgeräten einer Küchenmaschine wird somit erleichtert.

Es wird vorgeschlagen, dass die Verriegelungseinrichtung eine das Verriegelungselement antreibende und mit dem Betätigungselement in mechanischer Wirkverbindung stehende Antriebseinrichtung aufweist. Die Antriebseinrichtung des Zubereitungsgefäßes dient zur Übertragung mechanischer Kräfte von einer Betätigungseinrichtung einer Küchenmaschine auf das Verriegelungselement der Verriegelungseinrichtung des Zubereitungsgefäßes. Die Betätigungseinrichtung der Küchenmaschine kann beispielsweise einen Elektromotor aufweisen, welcher direkt das Betätigungselement des Zubereitungsgefäßes antreibt oder vorzugsweise unter Zwischenanordnung eines Getriebes auf das Betätigungselement wirkt. Das Getriebe der Küchenmaschine kann beispielsweise eine Mehrzahl von Verzahnungselementen aufweisen, beispielsweise ein Stirnradgetriebe und ein Schneckengetriebe, und mit einem in der Wirkungskette zuletzt angetriebenen Getriebeelement auf das Betätigungselement des Zubereitungsgefäßes einwirken. Das Betätigungselement des Zubereitungsgefäßes, beispielsweise ein in dem Topffuß des Zubereitungsgefäßes angeordnetes Zahnrad, ist Teil der gefäßseitigen Antriebseinrichtung, die in mechanischer Wirkverbindung mit der Betätigungseinrichtung der Küchenmaschine steht. Das Betätigungselement des Zubereitungsgefäßes überträgt die Antriebskraft schließlich via der Antriebseinrichtung auf das Verriegelungselement, welches das Verriegeln des Deckels auf dem Topf bewirkt.

Die Antriebseinrichtung kann gemäß einer bevorzugten Ausgestaltung ein Antriebselement aufweisen, welches ausgehend von dem Topffuß bis zu dem Deckel durch eine Wandung des Topfes und/oder einen Handgriff des Topfes geführt ist. Bei dem Antriebselement kann es sich insbesondere um eine Rotationswelle handeln. Gemäß dieser Ausgestaltung kann die Verriegelungseinrichtung aus besonders wenigen Einzelteilen hergestellt sein. Insbesondere kann das Betätigungselement der Verriegelungseinrichtung in dem Topffuß unmittelbar mit dem Antriebselement verbunden sein, welches im Bereich der Gefäßöffnung dann auf das Verriegelungselement wirkt, um schlussendlich die Verriegelung des Deckels mit dem Topf herbeizuführen. Eine Rotationswelle eignet sich als Antriebselement insbesondere, da diese platzsparend in eine Wandung des Topfes und/oder einen Handgriff des Topfes integriert werden kann. Dadurch ergibt sich eine Ausgestaltung, bei welcher alle Elemente der Antriebseinrichtung in das Gehäuse des Zubereitungsgefäßes integriert sind und nicht nach außen ragen, wo sich ein Nutzer des Zubereitungsgefäßes verletzen könnte oder sich Lebensmittelreste oder Schmutz ablagern können. Somit wird nicht zuletzt auch die Reinigung des Zubereitungsgefäßes erleichtert. In der Wandung des Topfes bzw. in dem Handgriff kann ein Hohlraum vorgesehen sein, innerhalb dessen sich das Antriebselement, bevorzugt eine Rotationswelle, erstreckt. Das Antriebselement, bevorzugt die Rotationswelle, kann im Bereich der Topföffnung auf das Verriegelungselement der Verriegelungseinrichtung einwirken. Beispielsweise kann ein Teilbereich des Antriebselementes eine Verzahnung aufweisen, die in eine entsprechende Verzahnung des Verriegelungselementes eingreift.

Das Verriegelungselement ist ein rotierbar an dem Topf oder dem Deckel gelagerter, die Topföffnung in einem mittels des Deckels verschlossenen Zustand umgebender Verriegelungsring , wobei dem Verriegelungselement eine Antriebseinrichtung zugeordnet ist, welche eingerichtet ist, das Verriegelungselement um die Topföffnung zu rotieren. Der Verriegelungsring kann seinerseits beispielsweise unmittelbar eine Verriegelung zwischen dem Topf und dem Deckel herbeiführen oder zunächst auf ein Zwischenelement einwirken, welches dann die Verriegelung herbeiführt. Der Verriegelungsring kann beispielsweise ein Element eines Bajonettverschlusses bereitstellen und/oder eine Kulisse mit Rampen oder ähnlichem bereitstellen, welche eine insbesondere axiale Verlagerung des Deckels relativ zu dem Topf ermöglichen. Dadurch kann der Deckel auf den Topf gedrückt oder gezogen werden und insbesondere so verspannt werden, dass eine fluiddichte Verriegelung des Topfes gewährleistet ist. Gemäß dieser Ausgestaltung ist das Verriegelungselement nicht bewegungsfest mit dem Topf bzw. dem Deckel verbunden, sondern vielmehr relativ zu diesem rotierbar. Dadurch muss lediglich das Verriegelungselement von der Antriebseinrichtung rotiert werden, und nicht etwa der ganze Deckel. Dadurch ist es möglich, für die Antriebseinrichtung des Zubereitungsgefäßes sowie auch die Betätigungseinrichtung der Küchenmaschine leichtere und/ oder kleinere Komponenten bzw. einen Elektromotor mit geringerer Leistung zu verwenden, was bei der Herstellung des Zubereitungsgefäßes und/oder der Küchenmaschine Gewicht und Kosten spart.

Es wird vorgeschlagen, dass das Verriegelungselement zumindest ein Wirkelement aufweist, welches ausgebildet ist, bei Rotation des Verriegelungselementes eine axiale Verlagerung des Deckels zu dem Topf (5) hin und/oder ein radial nach außen wirkendes Verspannen des Deckels zu bewirken. Ein solches Wirkelement kann beispielsweise eine Rampe sein, welche in Verriegelungsrichtung an dem als Verriegelungsring ausgebildeten Verriegelungselement ausgebildet ist. In diesem Fall weist das Verriegelungselement eine Führungskulisse auf, an welcher ein korrespondierender Teilbereich des Deckels oder des Topfes entlanggleiten kann. Des Weiteren kann ein Wirkelement beispielsweise auch ein Teilelement eines Bajonettverschlusses sein, wobei ein Teilbereich des Verriegelungselementes in eine korrespondierende Öffnung des Deckels bzw. des Topfes hineingreift. In jedem Fall ist das Wirkelement so ausgebildet, dass es bei Rotation des Verriegelungselementes zu einer axialen Verlagerung des Deckels relativ zu dem Topf und/oder zu einem Verspannen des Deckels in eine radial nach außen weisende Richtung kommt. Das Wirkelement des Verriegelungselementes kontaktiert den betreffenden Teilbereich des Deckels bzw. Topfes und drängt den Deckel in die gewünschte Verriegelungsposition. Insofern bildet das Wirkelement ein Führungselement einer Führungseinrichtung bzw. Führungskulisse. Beispielsweise kann das Verriegelungselement auch ein elastischer Verriegelungsring sein, welcher rotierbar an dem Topf gelagert ist und sich bei Rotation entlang einer Kulisse des Topfes aufweitet und zusätzlich axial in Längserstreckung des Topfes verlagert wird. Beim Aufweiten taucht der Verriegelungsring beispielsweise in einen Hinterschnitt des Deckels ein und bewegt diesen in eine Verriegelungsstellung. Die radiale und axiale Verlagerungsbewegung erfolgen dabei vorzugsweise nacheinander, wobei zuerst eine Bewegung nach außen, und dann in Längsrichtung des Topfes bevorzugt ist. Alternativ zu einer elastischen Ausbildung des Verriegelungsringes kann der Verriegelungsring auch auf einem Grundkörper beweglich gelagerte Teilelemente aufweisen, die bei Rotation nach radial außen verlagert werden können. Darüber hinaus kann der Verriegelungsring auch bezogen auf einen oder mehrere Umfangsteilbereiche geschlitzt sein, so dass ein korrespondierendes Kulissenelement zumindest zeitweise in den Verriegelungsring eingreifen kann und dadurch eine Durchmesseränderung des Verriegelungsringes hervorruft.

Gemäß einer möglichen Ausführung wird vorgeschlagen, dass das Wirkelement zur Bildung eines Bajonettverschlusses in eine korrespondierende Öffnung des Deckels oder des Topfes eingreifbar ist, wobei das Wirkelement oder ein Teilbereich des Deckels oder des Topfes eine in Verriegelungsrotationsrichtung ansteigende Rampe aufweist, die eine axiale Verlagerung des Deckels relativ zu dem Topf und damit ein Verriegeln des Topfes mit dem Deckel bewirkt. Gemäß dieser Ausgestaltung bildet das Wirkelement ein Teilelement eines Bajonettverschlusses. Das korrespondierende Element des Bajonettverschlusses ist dabei ein Teilbereich des Deckels bzw. des Topfes mit einer Öffnung. Das Wirkelement greift in die Öffnung hinein und folgt bei der Rotation des Verriegelungselementes einer ansteigenden Rampe, woraus eine axiale Verlagerung des Deckels relativ zu dem Topf resultiert. Die Rampe kann an dem Wirkelement selbst ausgebildet sein, wobei ein Teilbereich des Wirkelementes durch die Öffnung des Deckels bzw. des Topfes im Sinne eines Bajonettverschlusses hindurchgreift und ein anderer Teilbereich des Wirkelementes die Rampe aufweist bzw. an einer korrespondierenden Rampe des Deckels bzw. des Topfes entlanggleitet. Das Wirkelement und die Rampe können auch örtlich voneinander getrennt ausgebildet sein, wobei das Wirkelement nur die Funktion hat, in die Öffnungen des Bajonettverschlusses einzugreifen, und die Rampe dafür sorgt, dass der Deckel relativ zu dem Topf verspannt wird. In diesem Sinne sind zwei gleichwirkende Ausführungsformen möglich. Bei einer ersten Ausführungsform kann der rotierende Verriegelungsring an dem Topf des Zubereitungsgefäßes gelagert sein und in korrespondierende Bajonettkonturen des Deckels eingreifen und den Deckel dadurch in Richtung des Topfes ziehen. Gemäß einer alternativen Ausführungsform kann das rotierende Verriegelungselement ein an dem Deckel gelagerter Verriegelungsring sein, welcher in korrespondierende Bajonettkonturen des Topfes eingreift und den Deckel somit in Richtung des Topfes verlagert. Die korrekte Funktion des Bajonettverschlusses ist von einem gerichteten Auflegen des Deckels auf den Topf abhängig, so dass korrespondierende Elemente des Bajonettverschlusses ineinandergreifen können. Um darüber hinaus zu verhindern, dass sich der Deckel bei Betätigung des Verriegelungsringes mitbewegt, weisen der Topf und/oder der Deckel vorzugsweise Anschlagselemente auf, die als Verdrehsicherung dienen. Um darüber hinaus erkennen zu können, ob der Deckel richtig mit dem Topf verriegelt ist, können die korrespondierenden Bajonettelemente des Bajonettverschlusses mit Endanschlägen ausgestattet sein. Wenn der Deckel zu Beginn der Verriegelungsbewegung richtig auf den Topf aufgelegt ist, ist es möglich, den Verriegelungsring zu rotieren, bis ein Endanschlag an dem korrespondierenden Bajonettelement erreicht ist. Wenn der Deckel nicht korrekt, beispielsweise schräg, aufgelegt ist, ist es nicht möglich, den Verriegelungsring bis zu dem Endanschlag zu rotieren. Wenn gar kein Deckel auf den Topf aufgelegt ist, kann der Verriegelungsring über ein definiertes Maß hinaus rotiert werden, da der Verriegelungsring nicht gegen ein Anschlagselement stößt. Durch eine Auswertung einer aktuellen Rotationsstellung des Verriegelungsringes kann somit ermittelt werden, ob ein Deckel auf den Topf aufgelegt ist bzw. ob der Deckel korrekt mit dem Topf verriegelt ist.

Eine alternative Ausführungsform, die nicht in den Umfang der Ansprüche fällt, kann vorsehen, dass der Topf oder der Deckel ein beweglich an dem Topf bzw. dem Deckel gelagertes Zwischenelement aufweist, wobei das Wirkelement des Verriegelungselementes ausgebildet ist, das Zwischenelement bei Rotation des Verriegelungselementes in axialer und/oder radialer Richtung gegen einen Teilbereich des Deckels bzw. des Topfes zu drücken und dadurch ein Verriegeln des Topfes mit dem Deckel zu bewirken. Gemäß dieser Ausgestaltung wird der Deckel nicht unmittelbar mittels des Verriegelungselementes mit dem Topf verriegelt. Vielmehr wirkt das Wirkelement des Verriegelungselementes zunächst auf ein Zwischenelement, welches dann die Verriegelung zwischen dem Deckel und dem Topf hervorruft. Dadurch kann die Verriegelung unabhängig von einer Rotationsstellung des Deckels auf dem Topf zuverlässig erreicht werden. Der Komfort für den Nutzer ist erhöht, da diese Ausführungsform ein zuverlässiges Verriegeln auch bei ungerichtetem Auflegen des Deckels auf den Topf erlaubt. Das Zwischenelement kann in axialer und/oder radialer Richtung beweglich an dem Topf bzw. Deckel gelagert sein, wobei der auf dem Topf aufgelegte Deckel zunächst das Zwischenelement so in radialer und / oder axialer Richtung wegdrückt, dass dieses wiederum auf einen korrespondierenden Teilbereich des Deckels bzw. des Topfes wirkt und somit eine Verriegelung zwischen Topf und Deckel herbeiführt. Vorzugsweise kann das Verriegelungselement in Umfangsrichtung mehrere Kulissenelemente aufweisen, die im Sinne einer Kulissenführung auf ein oder mehrere Zwischenelemente wirken. Insbesondere kann es vorgesehen sein, dass das Wirkelement des Verriegelungselementes eine Führungskulisse bereitstellt, die bei Kontakt mit dem Zwischenelement und fortgeführter Rotation des Verriegelungselementes in Verriegelungsrichtung eine Verlagerung des Zwischenelementes sowohl in radiale Richtung, als auch in axiale Richtung bewirkt. Beispielsweise kann das Zwischenelement zunächst in eine bezogen auf das Topfinnere nach außen weisende radiale Richtung verlagert werden, wobei das Zwischenelement hinter einen an dem Deckel ausgebildeten Hinterschnitt greift. Bei weitergeführter Rotation des Verriegelungselementes wird das Zwischenelement dann durch eine entsprechende Formgestaltung des Wirkelementes in Längsrichtung des Topfes verlagert. Dabei nimmt das Zwischenelement den Deckel mit, bis dieser eine Endlage erreicht. Um den Deckel wieder zu entriegeln, kann der Verriegelungsring beispielsweise in entgegengesetzte Richtung rotiert werden, wobei das Zwischenelement mittels einer Rückstellfeder wieder aus der Endlage herausverlagert wird, d. h. sich in Richtung des Verriegelungselementes bewegt und der Deckel gelöst werden kann. Alternativ ist die Rückwärtsbewegung des Zwischenelementes auch mittels einer Kulissenführung möglich, oder mittels einer Kombination aus einer Rückstellfeder und einer Kulissenführung. Das Zwischenelement kann insbesondere in axiale und/oder radiale Richtung schwenkbar an dem Topf oder dem Deckel gelagert sein. Gemäß einer alternativen Ausführungsform der Erfindung ist es möglich, dass das Zwischenelement ein zu dem Verriegelungsring zweiter Rotationsring ist, der mittels des Verriegelungsringes manipuliert werden kann, beispielsweise so, dass sich das ringförmige Zwischenelement bei Kontakt mit dem Verriegelungsring und Rotation in Verriegelungsrichtung zunächst aufweitet und dann in axiale Richtung verlagert wird, so dass der Zwischenring beim Aufweiten beispielsweise in einen Hinterschnitt des Deckels bzw. des Topfes eingreift und den Deckel anschließend in axiale Richtung in eine Verriegelungsposition verlagert. Um zu erkennen, ob sich der Deckel tatsächlich auf dem Topf befindet und korrekt verriegelt wurde, kann ein Detektionsmechanismus zum Einsatz kommen. Der Detektionsmechanismus kann beispielsweise einen Detektionshebel beinhalten, der mit dem Verriegelungsring zusammenwirkt. Der Detektionshebel kann von einer Feder gegen den Verriegelungsring gedrückt werden. Der Verriegelungsring weist eine Aussparung auf. Wenn sich der Deckel nicht in einer zum Verriegeln geeigneten Position befindet, drückt die Feder den Detektionshebel in die Aussparung des Verriegelungsringes hinein, so dass der Verriegelungsring blockiert wird und nicht rotiert werden kann. Sofern der Deckel korrekt verriegelt wurde, wird der Detektionshebel von einem Rand des Deckels nach unten gedrückt, so dass der Detektionshebel nicht in die Aussparung des Verriegelungsringes eingreifen kann. Der Verriegelungsring kann dann ungehindert weiterrotieren. Zur Detektion der damit erreichten Rotationsstellung kann beispielsweise ein Rotationswinkel des Verriegelungsrings erfasst und ausgewertet werden, beispielsweise durch Ermitteln einer Anzahl von Umdrehungen einer Rotationswelle eines Antriebsmotors der Betätigungseinrichtung der Küchenmaschine. Ein blockierter Verriegelungsring kann des Weiteren zum Beispiel durch Auswerten eines Motorstroms erkannt werden. In dem Fall, dass der Deckel nicht korrekt auf den Topf aufgesetzt ist, wird der Verriegelungsring blockiert bevor eine definierte Rotationsstellung erreicht ist. Dieser Zustand wird als fehlerhafter Verriegelungszustand interpretiert. Bei korrekt aufgesetztem Deckel kann der Verriegelungsring hingegen weiterrotieren bis die definierte Rotationsstellung überschritten ist. Dieser Zustand wird dann als korrekt verriegelter Deckel interpretiert. Durch Anordnung mehrerer Detektionshebel und Aussparungen am Umfang des Verriegelungsrings kann besonders vorteilhaft ein Erreichen einer Verriegelungsstellung an mehreren Umfangspositionen des Deckels erkannt werden. Auf diese Weise kann sichergestellt werden, dass zum Beispiel auch ein schräg auf den Topf aufgelegter Deckel als Fehlerzustand erkannt wird.

Gemäß einer weiteren möglichen Ausführung kann das Zubereitungsgefäß eine an dem Topf angeordnete Führungskulisse mit einem in einer spiralförmigen Führungsbahn der Führungskulisse gelagerten Eingriffselement aufweisen, wobei die Führungsbahn um eine bezogen auf ein Inneres des Topfes nach radial außen weisende Spiralachse verläuft, und wobei eine Rotation des Verriegelungselementes eine axiale und radiale Verlagerung des Eingriffselementes entlang der spiralförmigen Führungsbahn zu einem Teilbereich des Deckels hin bewirkt bis ein aus der Führungskulisse herausweisender Teilbereich des Eingriffselementes an dem Deckel anliegt und damit ein Verriegeln des Topfes mit dem Deckel bewirkt ist. Auch bei dieser Ausgestaltung kann der Deckel in beliebiger Rotationsposition auf den Topf aufgelegt werden. Die Führungskulisse zur Bewirkung der Verriegelung ist dabei jedoch nicht dem Verriegelungsring zugeordnet, sondern an dem Topf angeordnet. In der Führungskulisse ist ein Eingriffselement geführt, welches durch den rotierenden Verriegelungsring manipuliert wird, nämlich derart, dass das Eingriffselement durch die Führungsbahn gezwungen wird und dabei gleichzeitig sowohl in eine radiale Richtung, als auch in eine axiale Richtung des Topfes verlagert wird. Das verlagerte Eingriffselement wirkt entlang seiner Verlagerungsbahn auf einen korrespondierenden Teilbereich des Deckels ein und verriegelt dadurch den Deckel mit dem Topf, indem der Deckel in axiale Richtung auf den Topf zu verlagert und mit diesem verspannt wird.

Neben dem zuvor beschriebenen Zubereitungsgefäß wird mit der Erfindung des Weiteren eine elektromotorisch betriebene Küchenmaschine, insbesondere ein Mixgerät, vorgeschlagen, wobei die Küchenmaschine ein Basisgerät und ein mit einem Aufnahmebereich des Basisgerätes verbindbares Zubereitungsgefäß aufweist, welches einen Topf und einen eine Topföffnung verschließenden Deckel aufweist, wobei das Zubereitungsgefäß des Weiteren nach einer der zuvor beschriebenen Ausführungsformen ausgebildet ist und das Basisgerät eine Betätigungseinrichtung aufweist, welche eingerichtet ist, die Verriegelungseinrichtung des Zubereitungsgefäßes im miteinander verbundenen Zustand von Basisgerät und Zubereitungsgefäß zu betätigen. Die Merkmale und Vorteile des Zubereitungsgefäßes ergeben sich somit entsprechend auch für die elektromotorisch betriebene Küchenmaschine. Insgesamt wird somit eine Küchenmaschine geschaffen, die mit einer Vielzahl von unterschiedlich ausgebildeten Zubereitungsgefäßen betrieben werden kann. Insbesondere ist die ordnungsgemäße Funktion der Küchenmaschine nicht mehr von einem Zubereitungsgefäß bestimmter Höhe abhängig. Vielmehr stellt das erfindungsgemäße Zubereitungsgefäß nun eine eigene Verriegelungseinrichtung bereit, so dass das Basisgerät der Küchenmaschine keine Verriegelungseinrichtung für das Zubereitungsgefäß mehr aufweisen muss. Der Topf des Zubereitungsgefäßes kann eine Vielzahl unterschiedlicher Höhen aufweisen und kann trotzdem noch so mit dem Basisgerät verbunden werden, dass der Deckel optimal mit dem Topf verriegelt werden kann. Der Topf ist in jedem Fall so ausgebildet, dass dessen Topffuß ein Betätigungselement zur Betätigung der Verriegelungseinrichtung des Zubereitungsgefäßes aufweist, wobei eine in dem Basisgerät angeordnete Betätigungseinrichtung zu dem Betätigungselement korrespondiert und dieses betätigen kann. Das Basisgerät weist als Betätigungseinrichtung vorzugsweise einen Elektromotor mit einem zugeordneten Getriebe auf, welches auf das Betätigungselement der Verriegelungseinrichtung einwirkt und somit ein Verriegeln des Deckels mit dem Topf veranlasst.

Es wird des Weiteren vorgeschlagen, dass die Küchenmaschine eine Sicherungseinrichtung zur Verriegelung des Zubereitungsgefäßes an dem Basisgerät der Küchenmaschine aufweist, wobei die Sicherungseinrichtung ein an dem Zubereitungsgefäß beweglich gelagertes Sicherungselement aufweist, welches hinter einen Hinterschnitt des Basisgerätes bewegbar ist, oder wobei die Sicherungseinrichtung ein an dem Basisgerät beweglich gelagertes Sicherungselement aufweist, welches hinter einen Hinterschnitt des Zubereitungsgefäßes bewegbar ist, wobei die Betätigungseinrichtung des Basisgerätes ausgebildet ist, gleichzeitig und zusätzlich zu der Betätigung der Verriegelungseinrichtung auch das Sicherungselement der Sicherungseinrichtung anzutreiben. Der Betätigungsmechanismus für die Deckelverriegelung kann somit gleichzeitig auch zur Verriegelung des Zubereitungsgefäßes an dem Basisgerät genutzt werden. Hierzu kann beispielsweise an dem Getriebe der Betätigungseinrichtung des Basisgerätes ein Vorsprung oder ein Hinterschnitt angeordnet sein, der bei einem bestimmten Rotationswinkel eines Getriebeelementes in eine an dem Topf angebrachte Gegenkontur greift. Je nach dem Rotationswinkel des Getriebeelementes kann der Topf dann entweder von dem Basisgerät getrennt werden oder fest mit diesem verbunden bleiben. Alternativ kann ein Vorsprung bzw. ein Hinterschnitt auch an einem Teilbereich des Zubereitungsgefäßes angeordnet sein, beispielsweise an einem beweglichen Element der Antriebseinrichtung des Zubereitungsgefäßes.

### Kurze Beschreibung der Zeichnungen

Im Folgenden wird die Erfindung anhand von Ausführungsbeispielen näher erläutert. Es zeigen:
- Fig. 1: eine Küchenmaschine mit einem Zubereitungsgefäß,
- Fig. 2: einen Aufnahmebereich der Küchenmaschine mit einem Zubereitungsgefäß in einer Ansicht von unten,
- Fig. 3: ein Zubereitungsgefäß gemäß einer ersten Ausführungsform in einer Schnittansicht,
- Fig. 4: eine Draufsicht auf das Zubereitungsgefäß,
- Fig. 5: eine Topföffnung des Zubereitungsgefäßes mit einem Verriegelungselement,
- Fig. 6: einen Teilbereich eines Deckels des Zubereitungsgefäßes und ein Verriegelungselement in einer ersten Stellung,
- Fig. 7: den Teilbereich des Deckels des Zubereitungsgefäßes und das Verriegelungselement in einer zweiten Stellung,
- Fig. 8: den Teilbereich des Deckels des Zubereitungsgefäßes und das Verriegelungselement in einer dritten Stellung,
- Fig. 9a: eine Verriegelungseinrichtung gemäß einer zweiten Ausführungsform in einer ersten Stellung,
- Fig. 9b: eine Seitenansicht gemäß Fig. 9a,
- Fig. 10a: die Verriegelungseinrichtung gemäß Fig. 9a in einer zweiten Stellung,
- Fig. 10b: eine Seitenansicht gemäß Fig. 10a,
- Fig. 11a: die Verriegelungseinrichtung gemäß Fig. 9a und Fig. 10a in einer dritten Stellung,
- Fig. 11b: eine Seitenansicht gemäß Fig. 11a,
- Fig. 12a: eine perspektivische Ansicht der in Fig. 11a und Fig. 11b dargestellten Stellung von schräg unten betrachtet,
- Fig. 12b: eine Stellung einer Detektionseinrichtung bei ordnungsgemäß mit dem Topf verbundenem Deckel,
- Fig. 12c: eine Stellung der Detektionseinrichtung bei Abwesenheit des Deckels,
- Fig. 13a: eine Verriegelungseinrichtung gemäß einer weiteren Ausführungsform in einer ersten Stellung,
- Fig. 13b: die Verriegelungseinrichtung gemäß Fig. 13a als skizziertes Wirkprinzip,
- Fig. 13c: die Darstellung gemäß Fig. 13b in einer Seitenansicht,
- Fig. 14a: eine Verriegelungseinrichtung gemäß einer weiteren Ausführungsform in einer ersten Stellung,
- Fig. 14b: die Verriegelungseinrichtung gemäß Fig. 14a als skizziertes Wirkprinzip,
- Fig. 14c: die Darstellung gemäß Fig. 14b in einer Seitenansicht,
- Fig. 15a: eine Verriegelungseinrichtung gemäß einer weiteren Ausführungsform in einer ersten Stellung,
- Fig. 15b: die Verriegelungseinrichtung gemäß Fig. 15a als skizziertes Wirkprinzip,
- Fig. 15c: die Darstellung gemäß Fig. 15b in einer Seitenansicht,
- Fig. 16a: eine Verriegelungseinrichtung gemäß einer weiteren Ausführungsform in einer ersten Stellung,
- Fig. 16b: die Verriegelungseinrichtung gemäß Fig. 16a als skizziertes Wirkprinzip,
- Fig. 16c: die Darstellung gemäß Fig. 16b in einer Seitenansicht,
- Fig. 17a: eine Verriegelungseinrichtung gemäß einer weiteren Ausführungsform in einer ersten Stellung,
- Fig. 17b: die Verriegelungseinrichtung gemäß Fig. 17a als skizziertes Wirkprinzip,
- Fig. 17c: die Darstellung gemäß Fig. 17b in einer Seitenansicht,
- Fig. 18a, 18b: ein Zubereitungsgefäß mit einer Sicherungseinrichtung zum Verriegeln des Zubereitungsgefäßes an einem Basisgerät einer Küchenmaschine.

### Beschreibung der Ausführungsformen

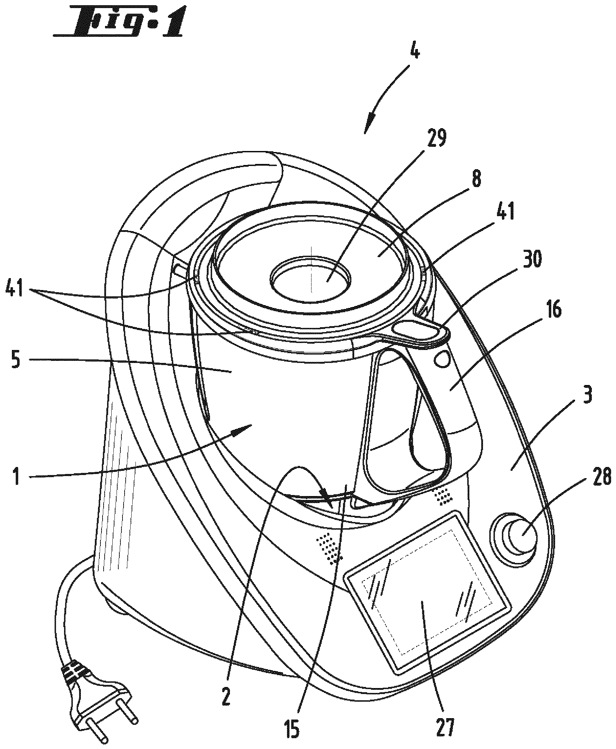

Figur 1 zeigt eine Küchenmaschine 4 mit einem Basisgerät 3, welches einen Aufnahmebereich 2 zur Verbindung mit einem Zubereitungsgefäß 1 aufweist. Das Basisgerät 3 der Küchenmaschine 4 verfügt über ein Display 27 zum Anzeigen von Funktionen der Küchenmaschine 4 und gegebenenfalls Rezepten, welche mittels der Küchenmaschine 4 zubereitet werden können. Neben dem Display 27 befindet sich ein Schalter 28, welcher einerseits zum Ein- und Ausschalten der Küchenmaschine 4, und andererseits zum Bestätigen von Eingabebefehlen oder ähnlichem dient. Das Zubereitungsgefäß 1 weist einen Topf 5 mit einem Handgriff 16 und einem Topffuß 6 auf, welcher zur Verbindung mit dem Aufnahmebereich 2 der Küchenmaschine 4 dient, sowie einen Deckel 8 mit einer Deckelöffnung 29 und einem Deckelgriff 30. Durch die Deckelöffnung 29 hindurch können beispielsweise Zutaten in den Topf 5 des Zubereitungsgefäßes 1 eingegeben werden.

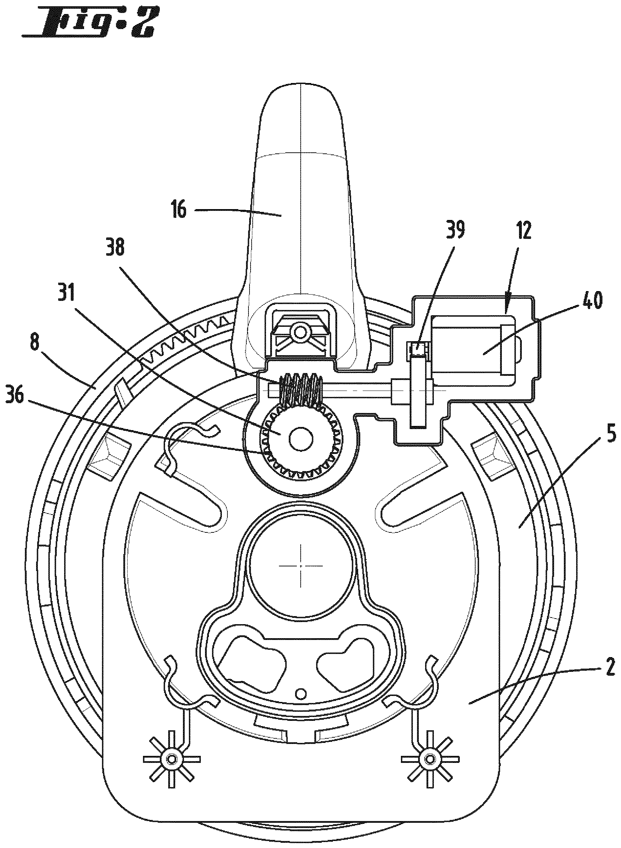

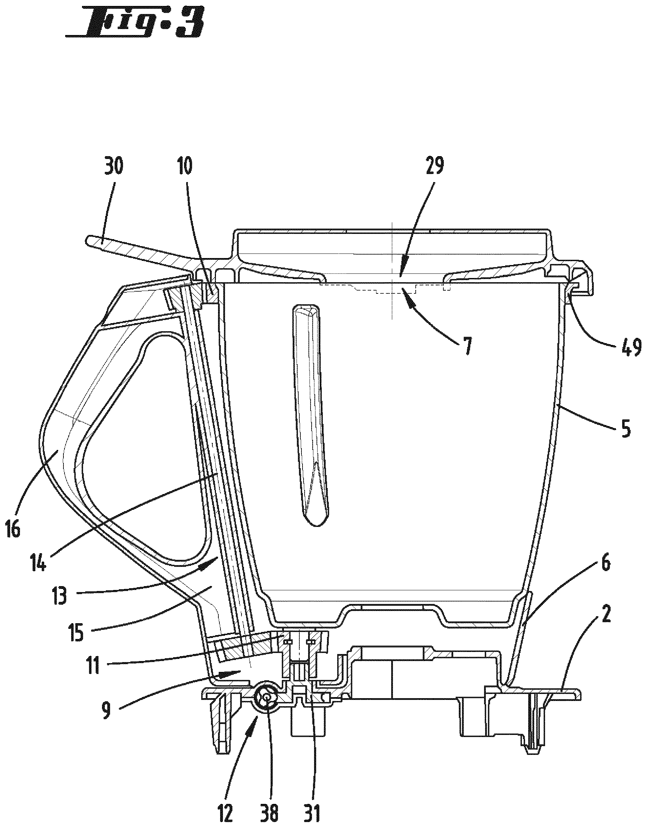

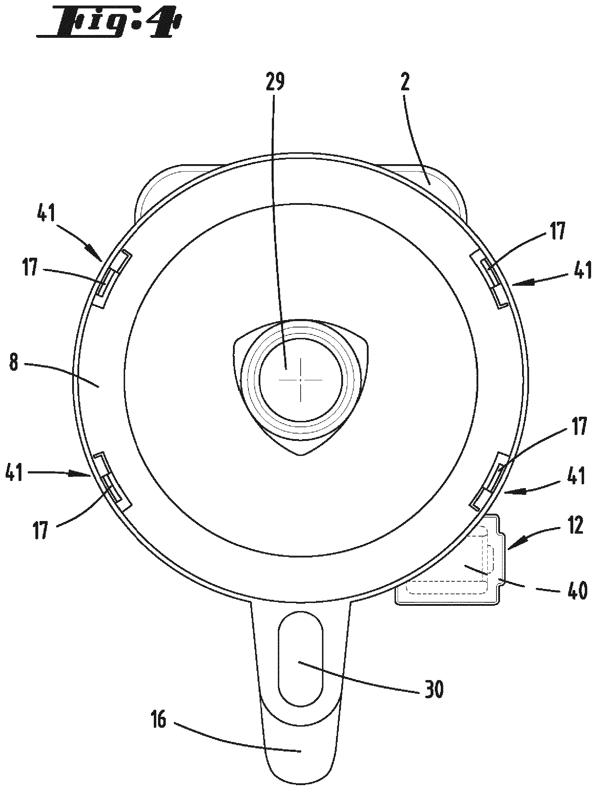

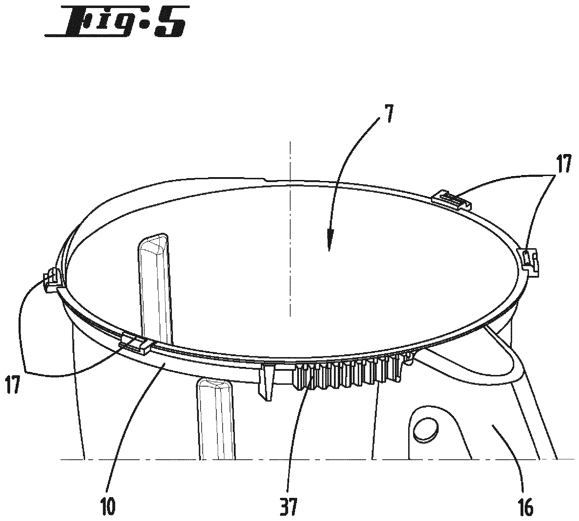

Die Figuren 2 und 3 zeigen im Einzelnen eine Verriegelungseinrichtung 9 des Zubereitungsgefäßes 1, mittels welcher der Topf 5 und der Deckel 8 des Zubereitungsgefäßes 1 miteinander verriegelt werden können. Der Aufnahmebereich 2 des Basisgerätes 3 der Küchenmaschine 4 verfügt über eine Betätigungseinrichtung 12 zur Einwirkung auf ein Betätigungselement 11 der Verriegelungseinrichtung 9 des Zubereitungsgefäßes 1, so dass die Küchenmaschine 4 einen Verriegelungsmechanismus des Zubereitungsgefäßes 1 betätigen kann, um den Deckel 8 mit dem Topf 5 zu verriegeln. Die Betätigungseinrichtung 12 der Küchenmaschine 4 weist hier beispielsweise im Einzelnen einen Elektromotor 40 auf, welcher ein Stirnradgetriebe 39 und ein damit verbundenes Schneckengetriebe 38 antreibt. Das Schneckengetriebe 38 wirkt wiederum auf ein Kupplungselement 31 des Basisgerätes 3. Das Kupplungselement 31 weist eine Verzahnung 36 auf, die in das Schneckengetriebe 38 eingreifen kann. Das Kupplungselement 31 dient zur Kupplung mit dem Betätigungselement 11 des Zubereitungsgefäßes 1. Das Betätigungselement 11 der Verriegelungseinrichtung 9 wirkt wiederum auf eine Antriebseinrichtung 13, welche ein in Umfangsrichtung rotierbar an dem Topf 5 gelagertes Verriegelungselement 10 der Verriegelungseinrichtung 9 antreibt. Das Verriegelungselement 10 ist in axiale Richtung des Topfes 5 nicht verlagerbar. Die axiale Verlagerung verhindern hier beispielsweise ein an der Topföffnung 7 ausgebildeter Kragen 49 und der Handgriff 16 des Topfes 5. Die Antriebseinrichtung 13 verfügt über ein Antriebselement 14, welches hier beispielsweise in der Form einer Rotationswelle ausgebildet ist. Die Rotationswelle ist durch eine Wandung 15 des Handgriffs 16 des Zubereitungsgefäßes 1 geführt und reicht bis zur Höhe einer Topföffnung 7 des Topfes 5, an welcher sich das Verriegelungselement 10 der Verriegelungseinrichtung 9 befindet. Wie insbesondere in den Figuren 4 und 5 erkennbar ist das Verriegelungselement 10 als Bajonettring ausgebildet. Der Bajonettring weist zur Verriegelung des Deckels 8 mit dem Topf 5 Wirkelemente 17 auf, die in entsprechende Bajonettöffnungen 41 des Deckels 8 eingreifen können. Das Verriegelungselement 10 weist des Weiteren eine Verzahnung 37 auf, welche mit einer nicht weiter dargestellten Verzahnung des Antriebselementes 14 korrespondiert, so dass es bei einer Rotation des Antriebselementes 14 zu einer Rotation des Verriegelungselementes 10 um die Topföffnung 7 kommt. Um zu verhindern, dass sich bei Rotation des Verriegelungselementes 10 auch der Deckel 8 mitdreht, können an Topf 5 und Deckel 8 korrespondierende Anschlagselemente (nicht dargestellt) vorgesehen sein, beispielsweise im Bereich des Hangriffes 16 und des Deckelgriffes 30.

Die Erfindung gemäß dieser beispielhaften Ausführung einer Verriegelungseinrichtung 9 eines Zubereitungsgefäßes 1 funktioniert so, dass ein Nutzer das Zubereitungsgefäß 1 mit dem Basisgerät 3 der Küchenmaschine 4 verbindet. Dabei kommt es zu einer Kupplung zwischen dem Kupplungselement 31 des Aufnahmebereiches 2 der Küchenmaschine 4 und dem Betätigungselement 11 der Verriegelungseinrichtung 9 des Zubereitungsgefäßes 1. Wenn der Nutzer nun über beispielsweise das Display 27 oder den Schalter 28 der Küchenmaschine 4 eine Verriegelung des Topfes 5 mit dem Deckel 8 veranlasst, oder wenn eine solche Verriegelung automatisch durch eine Steuereinrichtung der Küchenmaschine 4 initiiert wird, treibt der der Verriegelungseinrichtung 9 zugeordnete Elektromotor 40 der Küchenmaschine 4 das Stirnradgetriebe 39, das Schneckengetriebe 38 und das Kupplungselement 31 der Küchenmaschine 4 an, so dass es zu einer Rotation des Betätigungselementes 11 und damit auch des Antriebselementes 14 der Antriebseinrichtung 13 für das Verriegelungselement 10 kommt. Bei dem Auflegen des Deckels 8 auf den Topf 5 hat der Nutzer bereits den Deckelgriff 30 mit dem Handgriff 16 in Übereinanderlage (siehe Figur 1) gebracht. Dadurch werden die Wirkelemente 17 des Verriegelungselementes 10 in der Nähe der Bajonettöffnungen 41 des Deckels 8 positioniert. Die Antriebseinrichtung 13 des Zubereitungsgefäßes 1 rotiert nun das Verriegelungselement 10 und verlagert damit auch die Wirkelemente 17 relativ zu den Bajonettöffnungen 41 des Deckels 8, bis eine Endstellung und damit auch der Bajonettverschluss zwischen den korrespondieren Teilbereichen von Topf 5 und Deckel 8 erreicht ist. Vorzugsweise weisen die Wirkelemente 17 des Verriegelungselementes 10 (oder alternativ der Deckel 8) Rampen 18 auf, die ein axiales Heranziehen des Deckels 8 in Richtung der Topföffnung 7 bewirken und somit den Deckel 8 auf den Topf 5 drücken und diesen verriegeln. Obwohl dies in den Figuren 2 bis 5 nicht dargestellt ist, kann das Verriegelungselement 10, nämlich der Bajonettring, anstatt an dem Topf 5 auch an dem Deckel 8 angeordnet sein.

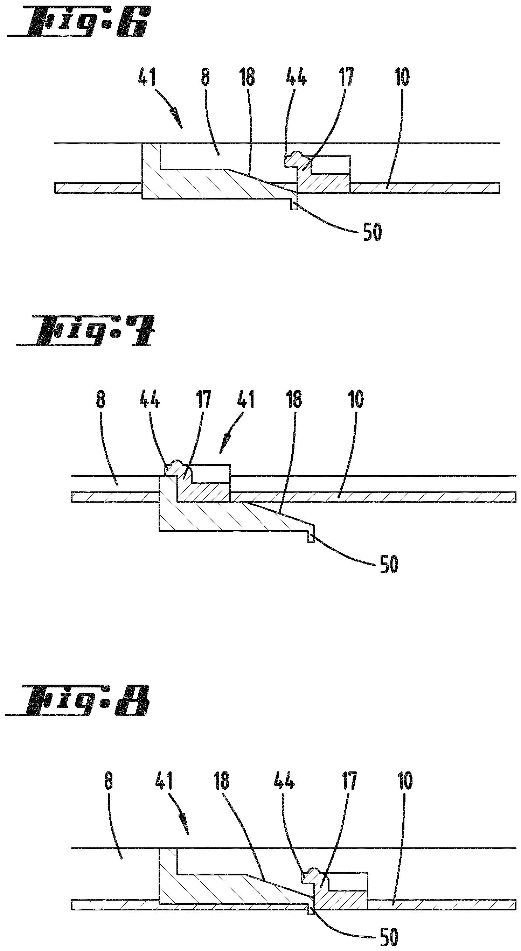

Die Figuren 6 bis 8 zeigen eine Prinzipskizze des in Figur 4 dargestellten Bajonettverschlusses zwischen Topf 5 und Deckel 8, wobei der Deckel 8 Rampen 18 aufweist, an welchen das Wirkelement 17 des Verriegelungselementes 10 entlanggleiten kann. Figur 6 zeigt einen Teilbereich des Deckels 8 mit einer Bajonettöffnung 41, welche zum Aufnehmen des Wirkelementes 17 des Verriegelungselementes 10 dient. In dem in Figur 6 dargestellten Zustand befindet sich das Wirkelement 17 noch vollständig neben der Rampe 18 des Deckels 8. Der Deckel 8 ist jedoch in einer optimalen Ausgangsstellung auf den Topf 5 aufgelegt, so dass das Wirkelement 17 des Verriegelungselementes 10 so am Fuße der Rampe 8 positioniert ist, dass das Wirkelement 17 ausgehend davon bei Rotation des Verriegelungselementes 10 auf die Rampe 18 gleiten kann und schließlich wie in Figur 7 dargestellt durch die Bajonettöffnung 41 ragt. Dabei greift eine Nase 44 des Wirkelementes 17 über die Oberseite des Deckels 8 hinaus und zieht den Deckel 8 nach unten in Richtung des Topfes 5. Figur 8 zeigt dagegen eine Situation, in welcher der Deckel 8 nicht ordnungsgemäß, beispielsweise leicht schräg, auf dem Topf 5 und damit auch dem Verriegelungselement 10 aufliegt. Dadurch stößt das Wirkelement 17 gegen eine Seitenkante 50 der Rampe 18, so dass das Wirkelement 17 nicht nach links rotiert werden kann und somit nicht auf die Rampe 18 gelangen kann. Dem Nutzer ist es somit nicht möglich, das Verriegelungselement 10 weiter zu rotieren und den Bajonettverschluss zu schließen. Sofern der Deckel 8 ganz fehlt, kann das Verriegelungselement 10 über ein definiertes maximales Maß hinaus relativ zu dem Topf 5 rotiert werden, da die Nase 44 des Wirkelementes 17 nicht gegen eine Kante der Bajonettöffnung 41 des Deckels 8 stößt. Eine nicht näher dargestellte Detektionseinrichtung, welche einen Rotationsweg bzw. Rotationswinkel des Verriegelungselementes 10 bzw. des Wirkelementes 17 relativ zu dem Topf 5 detektiert, kann dann anhand des Betrages der Rotation ermitteln, ob der Deckel 8 ordnungsgemäß mit dem Topf 5 verbunden wurde oder nicht. Sofern festgestellt wird, dass eine Verriegelung fehlgeschlagen ist, kann beispielsweise über das Display 27 der Küchenmaschine 4 eine entsprechende Warnung an den Nutzer ausgegeben werden.

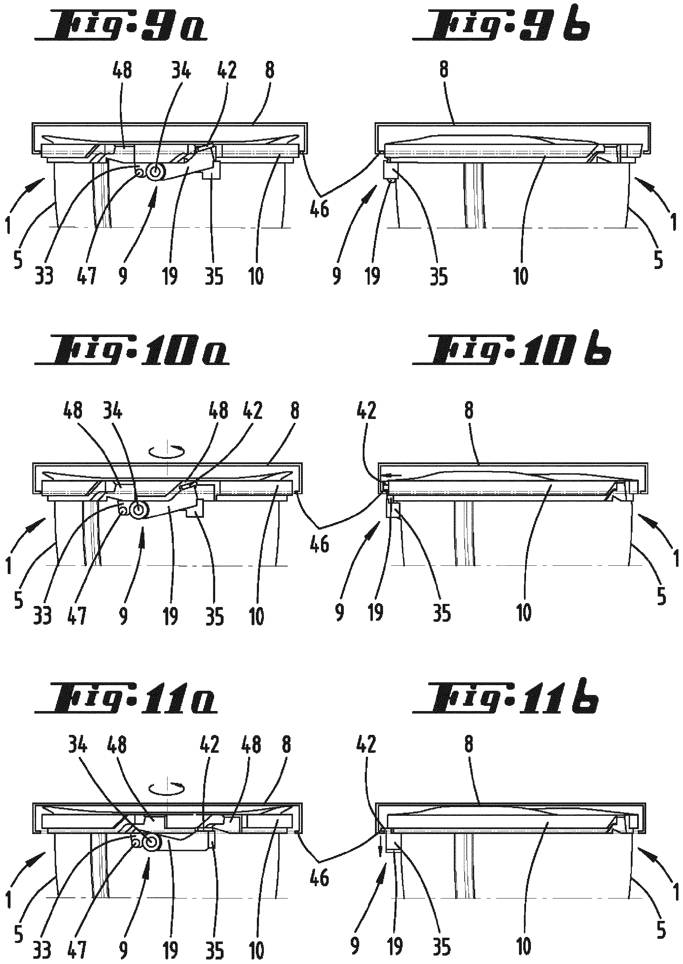

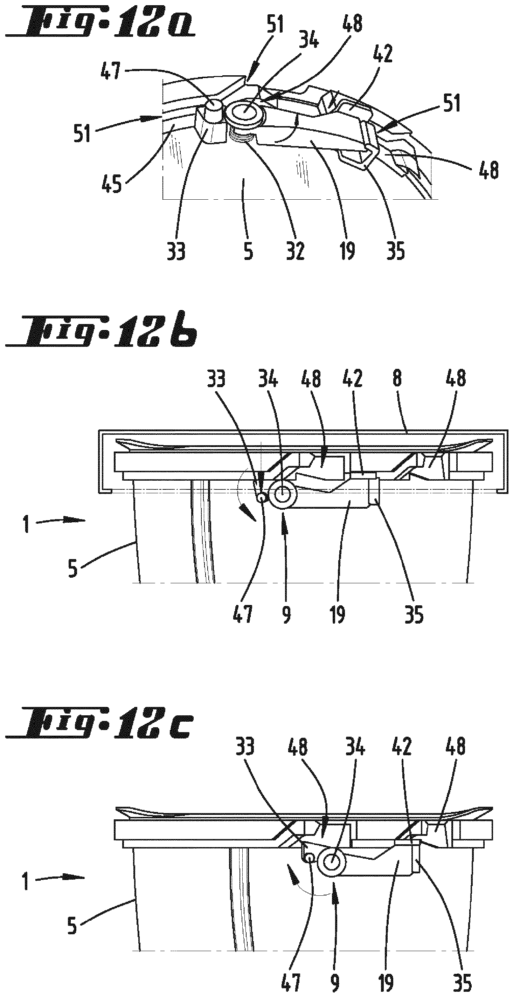

Die Figuren 9 bis 12 zeigen ein erfindungsgemäßes Zubereitungsgefäß 1 gemäß einer weiteren möglichen Ausführungsform. Das Zubereitungsgefäß 1 weist ebenfalls einen Topf 5, einen Deckel 8 und eine Verriegelungseinrichtung 9 zum Verriegeln des Topfes 5 mit dem Deckel 8 auf. Die Verriegelungseinrichtung 9 weist ein Verriegelungselement 10 auf, welches ebenfalls als rotierbarer Ring ausgebildet ist, der rotierbar an dem Topf 5 gelagert ist. Die Verriegelungseinrichtung 9 weist des Weiteren ein mittels des Verriegelungselementes 10 manipulierbares Zwischenelement 19 auf. Das Zwischenelement 19 ist ein verschwenkbarer Hebel, welcher um eine Schwenkachse 34 verschwenkbar an dem Topf 5 gelagert ist und einen an einem freien Endbereich ausgebildeten Vorsprung 42 aufweist, der wie in den Figuren 10b und 11b erkennbar hinter einen Kragen 46 des Deckels 8 greifen kann. Der Vorsprung 42 befindet sich an dem freien Endbereich des Zwischenelementes 19, welcher von der Schwenkachse 34 abgewandt ist. Die Lagerung des Zwischenelementes 19 an der Schwenkachse 34 ermöglicht sowohl ein Verschwenken parallel zu der Wandung 15 des Topfes 5, als auch ein Verschwenken von der Wandung 15 weg, wobei sich der Vorsprung 42 an dem Topf 5 nach außen stellt. Dem Zwischenelement 19 ist des Weiteren eine Detektionseinrichtung 33 zugeordnet, welche eingerichtet ist, einen Verriegelungszustand zwischen dem Topf 5 und dem Deckel 8 zu detektieren. Dem Zwischenelement 19 ist des Weiteren ein Niederhalter 35 zugeordnet, sowie eine Rückstellfeder 32 (siehe Figur 12a), welche das Zwischenelement 19 bezogen auf die Rotation um die Schwenkachse 34 mit einer Rückstellkraft beaufschlagt, die in Richtung des Verriegelungselementes 10 wirkt. Die Ausbildung der Verriegelungseinrichtung 9 unter Beteiligung eines Zwischenelementes 19 erlaubt ein Verriegeln des Topfes 5 mit dem Deckel 8 auch dann, wenn der Nutzer den Deckel 8 in einer beliebigen Rotationsstellung auf den Topf 5 auflegt.

Die Wirkungsweise wird im Folgenden mit Bezug zu den Figuren 9 bis 11 näher erläutert, wobei die Figuren 9b, 10b und 11b jeweils eine um 90° gedrehte Ansicht des Zubereitungsgefäßes 1 gemäß den Figuren 9a, 10a und 11a darstellen. Dargestellt ist jeweils nur ein Zwischenelement 19, wobei der Topf 5 auch mehrere in Umfangsrichtung des Topfes 5 angeordnete Zwischenelemente 19 aufweisen kann, die mit dem Verriegelungselement 10 interagieren. Das Verriegelungselement 10 wird beispielsweise wie zuvor in Bezug auf die Figuren 2 und 3 erläutert von einer Antriebseinrichtung 13 angetrieben, die wiederum von einer Betätigungseinrichtung 12 eines Basisgerätes 3 der Küchenmaschine 4 angetrieben wird. Das Verriegelungselement 10 verfügt über, insbesondere in der Figur 12a erkennbare, Führungskonturen 51, die ein Verschwenken des Zwischenelementes 19 um die Schwenkachse 34 bewirken, wenn das Verriegelungselement 10 relativ zu dem Topf 5 und damit auch relativ zu dem Zwischenelement 19 rotiert. Die Führungskonturen 51 beinhalten unter anderem einen Absatz 45 (siehe Figur 12a) des Verriegelungselementes 10, auf welchem die Detektionseinrichtung 33 bei ordnungsgemäßem Auflegen des Deckels 8 auf den Topf 5 entlanggleitet und somit detektiert, dass der Nutzer den Deckel 8 ordnungsgemäß auf den Topf 5 aufgelegt hat.

In der in den Figuren 9a und 9b dargestellten Situation liegt der Deckel 8 noch unverriegelt auf dem Topf 5, wobei sich das Zwischenelement 19 in einer Ausgangsstellung befindet, in welcher die Rückstellfeder 32 entspannt ist. An der Unterseite des Deckels 8 kann eine (hier nicht dargestellte) Dichtung angeordnet sein, welche eine eine Rückstellkraft aufweisende Materialelastizität hat, die geeignet ist, den Deckel 8 bei noch losem Auflegen auf den Topf 5 von dem Topf 5 zu beabstanden. Wenn das Verriegelungselement 10 nun mittels der Antriebseinrichtung 13 um den Topf 5 rotiert, bewirkt die an dem Verriegelungselement 10 ausgebildete Führungskontur 51 zunächst ein Verschwenken des Zwischenelementes 19 in eine von dem Topf 5 wegweisende Richtung, so dass der Vorsprung 42 wie in Figur 10b verdeutlicht hinter einen Kragen 46 des Deckels 8 greifen kann. Dies kann durch eine Rampe der Führungskontur 51 erreicht werden, die bezogen auf eine radiale Richtung des ringförmigen Verriegelungselementes 10 seitlich gegen das Zwischenelement 19 wirkt und dieses somit von der Wandung 15 des Topfes 5 beabstandet. Die axiale Position des Deckels 8 relativ zu dem Topf 5 ändert sich zunächst nicht. Es greift lediglich der Vorsprung 42 des Zwischenelementes 19 hinter den Kragen 46 des Deckels 8 und zentriert den Deckel 8 somit über der Topföffnung 7. Ein weiter geführtes Rotieren des Verriegelungselementes 10 führt dann zu der in den Figuren 11a und 11b dargestellten Situation. Dazu wird das Zwischenelement 19 durch die Führungskontur 51 des Verriegelungselementes 10 bezogen auf die Darstellungsebene der Figuren nach unten gedrückt, d. h. von dem Verriegelungselement 10 weg. Hierbei nimmt der Vorsprung 42 des Zwischenelementes 19 den Deckel 8 mit und zieht diesen in eine untere Endlage. In dieser Endlage wird der Deckel 8 mittels des Zwischenelementes 19 fixiert, welches sich wie in den Figuren 11a und 11b dargestellt an dem Verriegelungselement 10 abstützt. Dadurch ist der Deckel 8 fest auf dem Topf 5 verriegelt. Um zu erreichen, dass das Zwischenelement 19 die verriegelte Endlage auch dann beibehält, wenn große Kräfte von innerhalb des Topfes 5 auf den Deckel 8 wirken, verhindert der Niederhalter 35 ein Zurückschwenken des Zwischenelementes 19. Um den Deckel 8 wieder zu entriegeln, wird das Verriegelungselement 10 in entgegengesetzte Richtung zurück in die Ausgangsposition gemäß den Figuren 9a und 9b rotiert. Das Zwischenelement 19 wird dann der Rückstellkraft der Rückstellfeder 32 folgend wieder in Richtung des Verriegelungselementes 10 verschwenkt, d. h. in den Figuren nach oben, wo es in eine entsprechende Aussparung 48 der Führungskontur 51 eingreifen kann. Dadurch wird das Zwischenelement 19 gleichzeitig auch wieder mit seinem Vorsprung 42 an die Wandung 15 des Topfes 5 geschwenkt, so dass der Vorsprung 42 nicht mehr hinter den Kragen 46 des Deckels 8 greift, sondern wie in Figur 9b dargestellt hinter der Außenkontur des Verriegelungselementes 10 zurücksteht.

Die Figuren 12 a bis 12c verdeutlichen die Funktion der dem Zwischenelement 19 zugeordneten Detektionseinrichtung 33. Die Detektionseinrichtung 33 ist - wie auch das Zwischenelement 19 - um die Schwenkachse 34 schwenkbar, wobei die Rückstellfeder 32 auch die Detektionseinrichtung 33 mit einer Rückstellkraft beaufschlagt, die in Richtung des Absatzes 45 gerichtet ist. In der in Figur 12a dargestellten Endstellung des Zwischenelementes 19, in welcher der Deckel 8 ordnungsgemäß mit dem Topf 5 verriegelt ist, stützt sich die Detektionseinrichtung 33 auf dem Absatz 45 der Führungskontur 51 des Verriegelungselementes 10 ab. Die Stellung der Detektionseinrichtung 33 wird dabei als vollendete Verriegelungsstellung erkannt. Die Detektionseinrichtung 33 wird von der Rückstellfeder 32 gegen den Absatz 45 der Führungskontur 51 gedrückt. Das Verriegelungselement 10 weist eine weitere Aussparung 48 auf, in welche die Detektionseinrichtung 33 bei nicht aufgelegtem Deckel 8 eingreifen kann. Sofern der Deckel 8 jedoch ordnungsgemäß aufgelegt wurde, drückt dieser gegen einen Vorsprung 47 der Detektionseinrichtung 33, so dass die Detektionseinrichtung 33 nicht in die Aussparung 48 einschwenken kann. Wenn sich der Deckel 8 nicht oder fehlerhaft auf dem Topf 5 befindet, schwenkt die Detektionseinrichtung 33 hingegen in die Aussparung 48 ein und verhindert eine Rotation des Verriegelungselementes 10. Nur wenn der Deckel 8 korrekt auf den Topf 5 aufgelegt ist, wird die Detektionseinrichtung 33 von dem Deckel 8 in die in Figur 12b dargestellte Position nach unten geschwenkt und das Verriegelungselement 10 kann weiterrotiert werden. Eine Rotationsstellung des Verriegelungselementes 10 kann beispielsweise durch Ermitteln einer Umdrehungszahl einer Antriebswelle eines Antriebsmotors der Verriegelungseinrichtung 9 detektiert werden. Wenn der Deckel 8 beispielsweise nicht korrekt auf den Topf 5 aufgesetzt ist, wird das Verriegelungselement 10 blockiert, bevor eine definierte Rotationsstellung des Verriegelungselementes 10 erreicht ist. Dieser Zustand wird dann als fehlerhaft aufgesetzter oder gar nicht vorhandener Deckel 8 erkannt. Bei korrekt aufgesetztem Deckel 8 kann das Verriegelungselement 10 hingegen weiterrotieren bis die definierte Rotationsstellung erreicht ist. Dies wird dann als korrekt verriegelter Deckel 8 interpretiert. Durch Anordnung mehrerer Detektionseinrichtungen 33 in Umfangsrichtung des Topfes 5 kann ein Verriegelungszustand des Deckels 8 an mehreren Positionen erkannt werden. Dadurch kann sichergestellt werden, dass zum Beispiel auch ein schräg auf den Topf 5 aufgelegter Deckel 8 als Fehler erkannt wird, da es ausreicht, wenn zumindest eine von mehreren Detektionseinrichtungen 33 nicht betätigt wird und somit ein Weiterrotieren des Verriegelungselementes 10 blockiert.

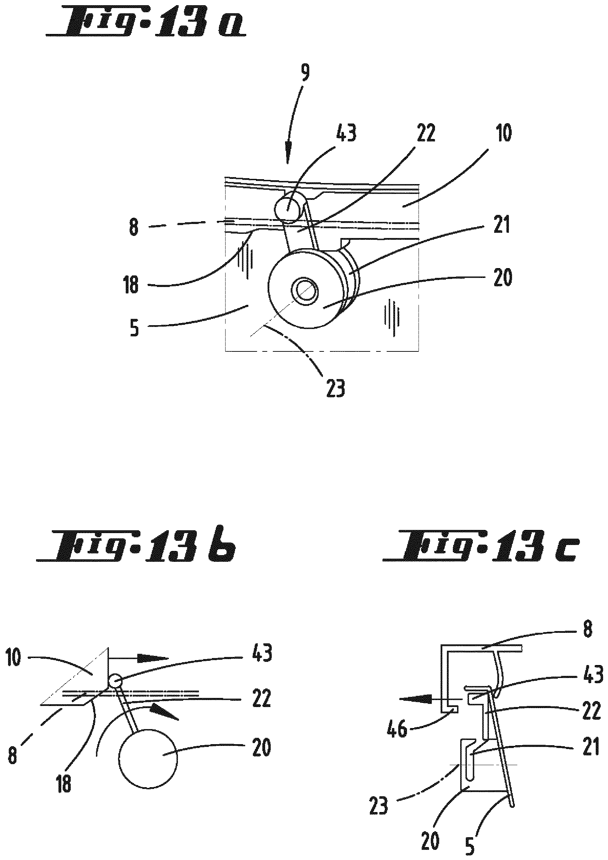

Die Figuren 13 bis 17 zeigen eine weitere Ausführungsform einer erfindungsgemäßen Verriegelungseinrichtung 9. Bei dieser Ausführung funktioniert die Verriegelung des Deckels 8 mit dem Topf 5 ebenfalls unabhängig von einer bestimmten Rotationsstellung des Deckels 8 auf dem Topf 5. Der Nutzer muss nicht darauf achten, den Deckel 8 in einer bestimmten Rotationsstellung auf den Topf 5 aufzulegen. Die Verriegelungseinrichtung 9 weist ebenfalls wieder ein rotierbar an dem Topf 5 gelagertes Verriegelungselement 10 auf, welches hier auf ein Eingriffselement 22 einwirkt, das in einer an dem Topf 5 ausgebildeten bzw. angeordneten Führungskulisse 20 geführt ist und mit einem endseitigen Teilbereich 43 aus der Führungskulisse 20 herausragt. Die Führungskulisse 20 weist eine spiralförmige Führungsbahn 21 auf, die um eine bezogen auf ein Inneres des Topfes 5 nach radial außen weisende Spiralachse 23 gewunden ist. Das rotierende Verriegelungselement 10 treibt das Eingriffselement 22 durch Einwirken auf den endseitigen Teilbereich 43 derart an, dass das Eingriffselement 22 durch die spiralförmige Führungsbahn 21 der Führungskulisse 20 geführt wird. Dabei wird das Eingriffselement 22 - wie im Folgenden mit Bezug zu den Figuren 13 bis 17 näher dargestellt - sowohl in Richtung der Spiralachse 23, als auch in Umfangsrichtung der Führungskulisse 20 verlagert. Die Figuren 13a, 14a, 15a, 16a und 17a zeigen das Eingriffselement 22 der Verriegelungseinrichtung 9 in unterschiedlichen Verriegelungsstellungen. Die Figuren 13b, 14b, 15b, 16b und 17b stellen das Wirkprinzip der jeweiligen Stellung dar. Die Figuren 13c, 14c, 15c, 16c und 17c zeigen die Verriegelungseinrichtung 9 in einem Querschnitt.

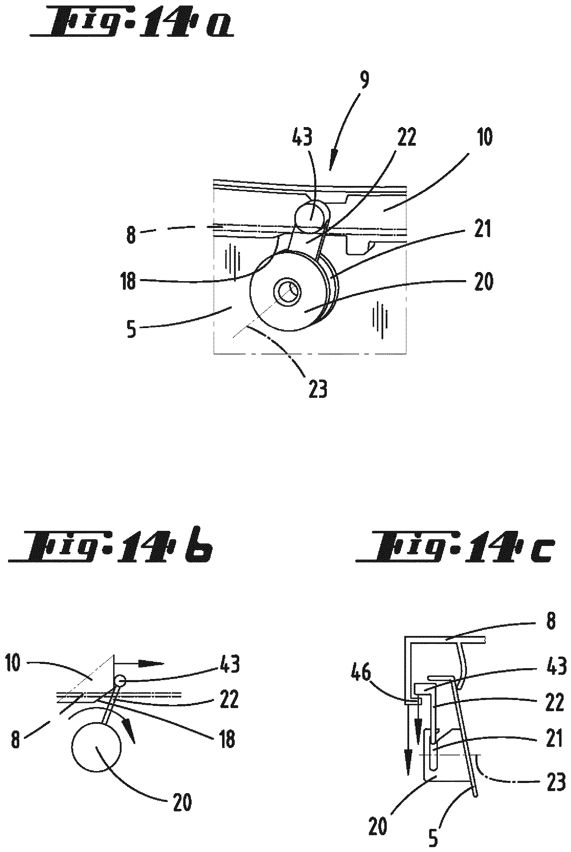

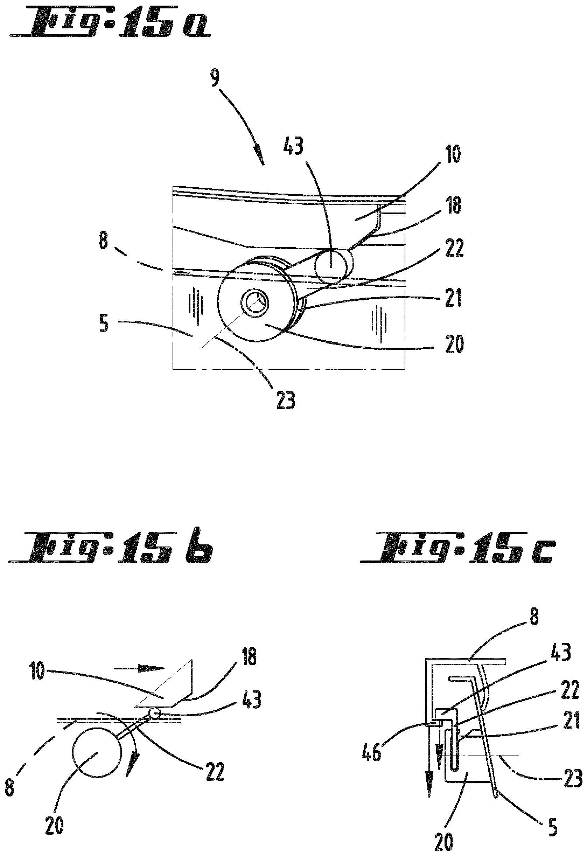

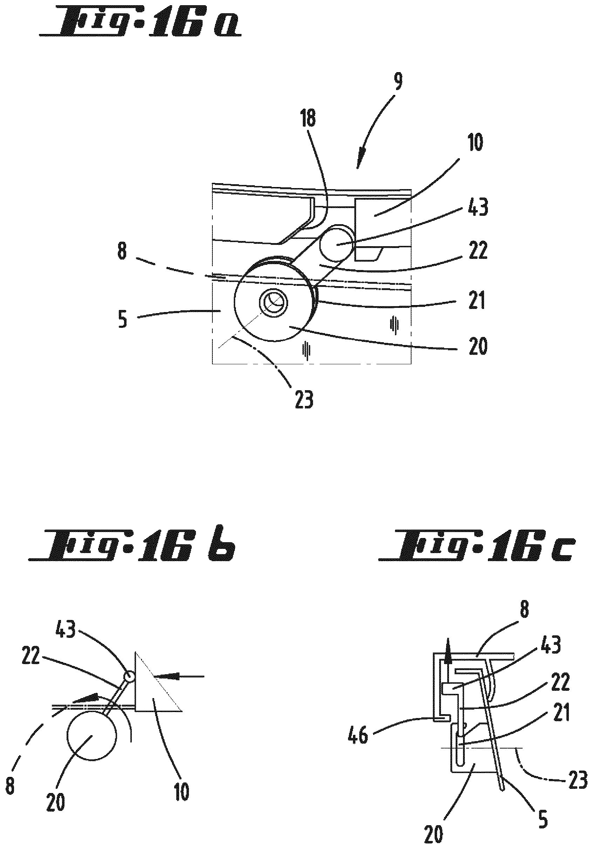

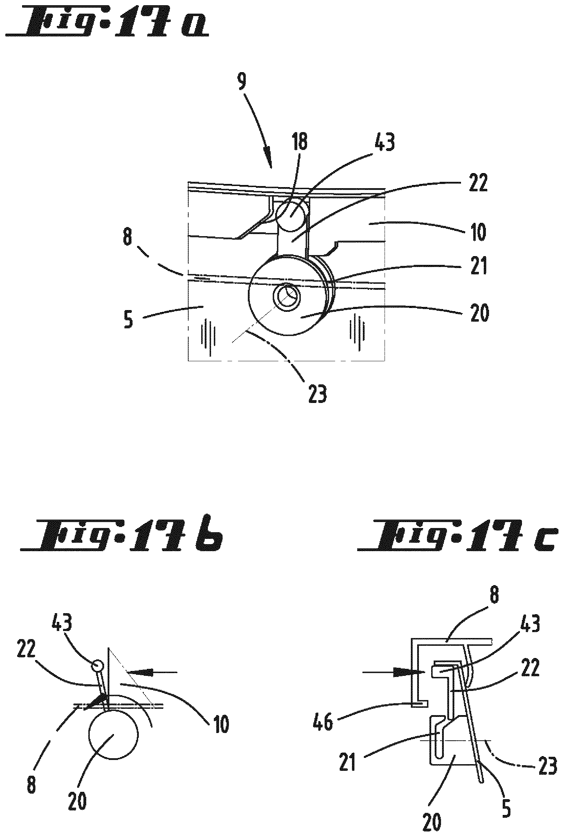

Die Figuren 13a, 13b und 13c zeigen zunächst eine Ausgangsstellung des Eingriffselementes 22, bei welcher der endseitige Teilbereich 43 des Eingriffselementes 22 noch nicht hinter den Kragen 46 des Deckels 8 greift. Der Teilbereich 43 gleitet bei in den Figuren nach rechts rotiertem Verriegelungselement 10 (siehe beispielsweise Figur 13b) an einer Rampe 18 des Verriegelungselementes 10 entlang und wird wie in den Figuren 14a und 14b gezeigt nach rechts verschwenkt. Dadurch gleitet das Eingriffselement 22 entlang der Führungsbahn 21 der Führungskulisse 20 zunächst, wie insbesondere in Figur 14c erkennbar, nach außen, d. h. von dem Topf 5 weg, bis der hakenförmige Teilbereich 43 des Eingriffselementes 22 hinter den Kragen 46 des Deckels 8 greift und diesen bezogen auf eine Richtung nach radial außen (ausgehend von einem Inneren des Topfes 5 betrachtet) verspannt. Bei weitergeführter Rotation des Verriegelungselementes 10 kippt das Eingriffselement 22, wie in den Figu-ren 15a, 15b und 15c dargestellt, weiter nach rechts, der Rampe 18 des Verriegelungselementes 10 folgend. Das Eingriffselement 22 wird dadurch weiter entlang der Führungsbahn 21 der Führungskulisse 20 verlagert und in die in Figur 15c dargestellte Endlage verfahren, in welcher der Deckel 8 vollständig auf den Topf 5 herabgezogen ist und zudem in radialer Richtung verspannt. Ausgehend von dieser optimal verriegelten Endstellung der Verriegelungseinrichtung 9 kann der Deckel 8 wieder von dem Topf 5 gelöst werden, indem die Verriegelungseinrichtung 9 in umgekehrte Richtung betätigt wird, d. h. das Verriegelungselement 10 nun bezogen auf die Darstellung der Figuren nach links rotiert wird. Die dann folgenden Stellungen des Eingriffselementes 22 sind in den Figuren 16 und 17 dargestellt. Auch bei der Freigabebewegung zur Entriegelung des Deckels 8 folgt das Eingriffselement 22 der Führungskontur 51 des Verriegelungselementes 10. Dabei wird das Eingriffselement 22, wie in den Figuren 16a, 16b und 16c gezeigt, zunächst mittels der Führungskulisse 20 soweit angehoben, dass der Teilbereich 43 nicht mehr in Kontakt mit dem Kragen 46 des Deckels 8 steht, und anschließend, wie in den Figuren 17a bis 17c dargestellt, nach radial innen verlagert, bis der Deckel 8, wie insbesondere aus Figur 17c ersichtlich, von dem Topf 5 gelöst werden kann, ohne dass der Teilbereich 43 des Eingriffselementes 22 vor den Kragen 46 des Deckels 8 stößt. Sodann kann der Deckel 8 von dem Topf 5 entfernt werden.

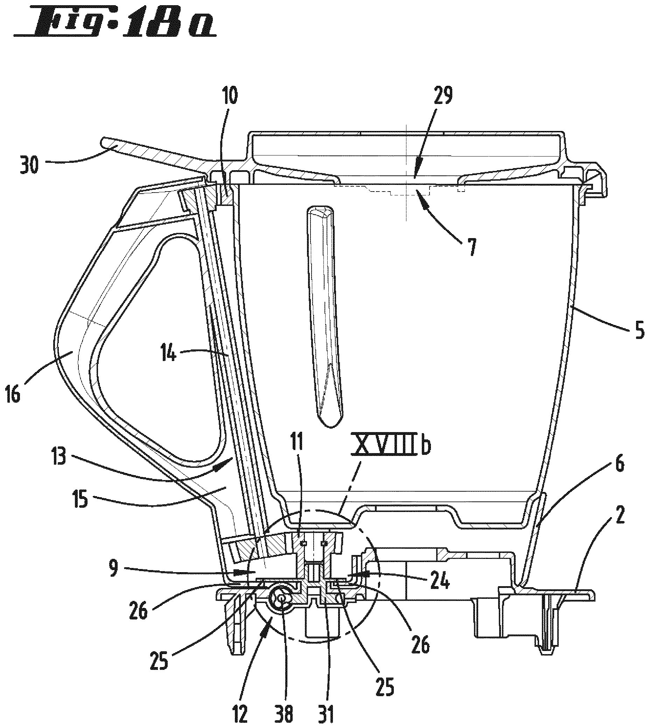

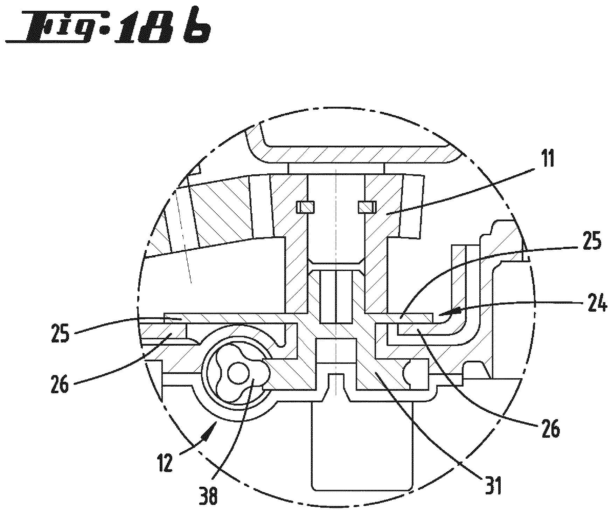

Die Figuren 18a und 18b zeigen schließlich eine besondere Ausführungsform einer erfindungsgemäßen Küchenmaschine 4, an deren Aufnahmebereich 2, nämlich hier beispielsweise einem Kupplungselement 31, zwei radial nach außen weisende flügelartige Sicherungselemente 25 angeordnet sind, die hinter korrespondierende Hinterschnitte 26 des Topffußes 6 des Zubereitungsgefäßes 1 greifen. Die Sicherungseinrichtung 24 verriegelt das Zubereitungsgefäß 1 mit dem Basisgerät 3 der Küchenmaschine 4, wenn sich das Kupplungselement 31 der Betätigungseinrichtung 12 in einer zu einer verriegelten Stellung des Deckels 8 auf dem Topf 5 korrespondierenden Rotationsstellung befindet. Dadurch wird erreicht, dass das Zubereitungsgefäß 1 ordnungsgemäß verriegelt ist, d. h. in dem Topf 5 enthaltene Speisen nicht aus dem Topf 5 entweichen können, und gleichzeitig das Zubereitungsgefäß 1 an dem Basisgerät 3 der Küchenmaschine 4 derart gesichert ist, dass das Zubereitungsgefäß 1 nicht von dem Basisgerät 3 getrennt werden kann. Sowohl die Verriegelungseinrichtung 9 für den Deckel 8, als auch die Sicherungseinrichtung 24 für die Verriegelung des Zubereitungsgefäßes 1 an dem Basisgerät 3 werden über dieselbe Betätigungseinrichtung 12 der Küchenmaschine 4 betrieben, so dass nur ein einziger Elektromotor 40 erforderlich ist, um mehrere Verriegelungsfunktionen zu erfüllen.

**Liste der Bezugszeichen**

| | | | |
|---|---|---|---|
| 1 | Zubereitungsgefäß | 27 | Display |
| 2 | Aufnahmebereich | 28 | Schalter |
| 3 | Basisgerät | 29 | Deckelöffnung |
| 4 | Küchenmaschine | 30 | Deckelgriff |
| 5 | Topf | 31 | Kupplungselement |
| 6 | Topffuß | 32 | Rückstellfeder |
| 7 | Topföffnung | 33 | Detektionseinrichtung |
| 8 | Deckel | 34 | Schwenkachse |
| 9 | Verriegelungseinrichtung | 35 | Niederhalter |
| 10 | Verriegelungselement | 36 | Verzahnung |
| 11 | Betätigungselement | 37 | Verzahnung |
| 12 | Betätigungseinrichtung | 38 | Schneckengetriebe |
| 13 | Antriebseinrichtung | 39 | Stirnradgetriebe |
| 14 | Antriebselement | 40 | Elektromotor |
| 15 | Wandung | 41 | Bajonettöffnung |
| 16 | Handgriff | 42 | Vorsprung |
| 17 | Wirkelement | 43 | Teilbereich |
| 18 | Rampe | 44 | Nase |
| 19 | Zwischenelement | 45 | Absatz |
| 20 | Führungskulisse | 46 | Kragen |
| 21 | Führungsbahn | 47 | Vorsprung |
| 22 | Eingriffselement | 48 | Aussparung |
| 23 | Spiralachse | 49 | Kragen |
| 24 | Sicherungseinrichtung | 50 | Seitenkante |
| 25 | Sicherungselement | 51 | Führungskontur |
| 26 | Hinterschnitt | | |

## Patentansprüche

1. Zubereitungsgefäß (1) zum Verbinden mit einem Aufnahmebereich (2) eines Basisgerätes (3) einer elektromotorisch betriebenen Küchenmaschine (4), wobei das Zubereitungsgefäß (1) einen Topf (5), einen mit dem Aufnahmebereich (2) verbindbaren Topffuß (6) und einen eine Topföffnung (7) des Topfes (5) verschließenden Deckel (8) aufweist, wobei weiter das Zubereitungsgefäß (1) eine Verriegelungseinrichtung (9) mit einem Verriegelungselement (10) zum Verriegeln des Topfes (5) mit dem Deckel (8) aufweist, wobei der Topffuß (6) mindestens ein Betätigungselement (11) zur Betätigung der Verriegelungseinrichtung (9) aufweist, wobei das Betätigungselement (11) so an dem Topffuß (6) angeordnet ist, dass dieses von einer korrespondierenden Betätigungseinrichtung (12) des Aufnahmebereiches (2) der Küchenmaschine (4) betätigbar ist, **dadurch gekennzeichnet, dass** das Verriegelungselement (10) ein rotierbar an dem Topf (5) oder dem Deckel (8) gelagerter, die Topföffnung (7), in einem mittels des Deckels (8) verschlossenen Zustand, umgebender Verriegelungsring ist, wobei dem Verriegelungselement (10) eine Antriebseinrichtung (13) zugeordnet ist, welche eingerichtet ist, das Verriegelungselement (10) um die Topföffnung (7) zu rotieren.

2. Zubereitungsgefäß (1) nach Anspruch 1, **dadurch gekennzeichnet, dass** die Verriegelungseinrichtung (9) eine das Verriegelungselement (10) antreibende und mit dem Betätigungselement (11) in mechanischer Wirkverbindung stehende Antriebseinrichtung (13) aufweist.

3. Zubereitungsgefäß (1) nach Anspruch 2, **dadurch gekennzeichnet, dass** die Antriebseinrichtung (13) ein Antriebselement (14), insbesondere eine Rotationswelle, aufweist, welches ausgehend von dem Topffuß (6) bis zu dem Deckel (8) durch eine Wandung (15) des Topfes (5) und/oder einen Handgriff (16) des Topfes (5) geführt ist.

4. Zubereitungsgefäß (1) nach einem der vorhergehenden Ansprüche,
**dadurch gekennzeichnet, dass** das Verriegelungselement (10) zumindest ein Wirkelement (17) aufweist, welches ausgebildet ist, bei Rotation des Verriegelungselementes (10) eine axiale Verlagerung des Deckels (8) zu dem Topf (5) hin und/oder ein radial nach außen wirkendes Verspannen des Deckels (8) zu bewirken.

5. Zubereitungsgefäß (1) nach Anspruch 4, **dadurch gekennzeichnet, dass** das Wirkelement (17) zur Bildung eines Bajonettverschlusses in eine korrespondierende Öffnung des Deckels (8) oder des Topfes (5) eingreifbar ist, wobei das Wirkelement (17) oder ein Teilbereich des Deckels (8) oder des Topfes (5) eine in Verriegelungsrotationsrichtung ansteigende Rampe (18) aufweist, die eine axiale Verlagerung des Deckels (8) relativ zu dem Topf (5) und damit ein Verriegeln des Topfes (5) mit dem Deckel (8) bewirkt.

6. Zubereitungsgefäß (1) nach Anspruch 4, **dadurch gekennzeichnet, dass** der Topf (5) oder der Deckel (8) ein beweglich an dem Topf (5) bzw. dem Deckel (8) gelagertes Zwischenelement (19) aufweist, wobei das Wirkelement (17) des Verriegelungselementes (10) ausgebildet ist, das Zwischenelement (19) bei Rotation des Verriegelungselementes (10) in axialer und/ oder radialer Richtung gegen einen Teilbereich des Deckels (8) bzw. des Topfes (5) zu drücken und dadurch ein Verriegeln des Topfes (5) mit dem Deckel (8) zu bewirken.

7. Zubereitungsgefäß (1) nach einem der vorhergehenden Ansprüche, **gekennzeichnet durch** eine an dem Topf (5) angeordnete Führungskulisse (20) mit einem in einer spiralförmigen Führungsbahn (21) der Führungskulisse (20) gelagerten Eingriffselement (22), wobei die Führungsbahn (21) um eine bezogen auf ein Inneres des Topfes (5) nach radial außen weisende Spiralachse (23) verläuft, und wobei eine Rotation des Verriegelungselementes (10) eine axiale und radiale Verlagerung des Eingriffselementes (22) entlang der spiralförmigen Führungsbahn (21) zu einem Teilbereich des Deckels (8) hin bewirkt bis ein aus der Führungskulisse (20) herausweisender Teilbereich (43) des Eingriffselementes (22) an dem Deckel (8) anliegt und damit ein Verriegeln des Topfes (5) mit dem Deckel (8) bewirkt ist.

8. Elektromotorisch betriebene Küchenmaschine (4), insbesondere Mixgerät, mit einem Basisgerät (3) und einem mit einem Aufnahmebereich (2) des Basisgerätes (3) verbindbaren Zubereitungsgefäß (1), welches einen Topf (5) und einen eine Topföffnung (7) verschließenden Deckel (8) aufweist, **dadurch gekennzeichnet, dass** das Zubereitungsgefäß (1) nach einem der vorhergehenden Ansprüche ausgebildet ist und dass das Basisgerät (3) eine Betätigungseinrichtung (12) aufweist, welche eingerichtet ist, die Verriegelungseinrichtung (9) des Zubereitungsgefäßes (1) im miteinander verbundenen Zustand von Basisgerät (3) und Zubereitungsgefäß (1) zu betätigen.

9. Küchenmaschine (4) nach Anspruch 8, **gekennzeichnet durch** eine Sicherungseinrichtung (24) zur Verriegelung des Zubereitungsgefäßes (1) an dem Basisgerät (3) der Küchenmaschine (4), wobei die Sicherungseinrichtung (24) ein an dem Zubereitungsgefäß (1) beweglich gelagertes Sicherungselement (25) aufweist, welches hinter einen Hinterschnitt (26) des Basisgerätes (3) bewegbar ist, oder ein an dem Basisgerät (3) beweglich gelagertes Sicherungselement (25) aufweist, welches hinter einen Hinterschnitt (26) des Zubereitungsgefäßes (1) bewegbar ist, wobei die Betätigungseinrichtung (12) des Basisgerätes (3) ausgebildet ist, gleichzeitig und zusätzlich zu der Betätigung der Verriegelungseinrichtung (9) auch das Sicherungselement (25) der Sicherungseinrichtung (24) anzutreiben.

## Claims

1. A preparation vessel (1) for connection with a receiving area (2) of a base unit (3) of an electric motor-driven food processor (4), wherein the preparation vessel (1) has a pot (5), a pot foot (6) that can be connected with the receiving area (2), and a cover (8) that closes the pot opening (7) of the pot (5), wherein further the preparation vessel (1) has a locking assembly (9) with a locking element (10) for locking the pot (5) with the cover (8), wherein the pot foot (6) has at least one activating element (11) for activating the locking assembly (9), wherein the activating element (11) is arranged on the pot foot (6) in such a way that it can be activated by a corresponding activating assembly (12) of the receiving area (2) of the food processor (4), **characterized in that** the locking element (10) is a locking ring that is rotatably mounted on the pot (5) or the cover (8) and envelops the pot opening (7) in a state closed by means of the cover (8), wherein the locking element (10) has allocated to it a drive assembly (13) that is set up to rotate the locking element (10) around the pot opening (7).

2. The preparation vessel (1) according to claim 1, **characterized in that** the locking assembly (9) has a drive assembly (13) that drives the locking element (10) and is mechanically operatively connected with the activating element (11).

3. The preparation vessel (1) according to claim 2, **characterized in that** the drive assembly (13) has a drive element (14), in particular a rotating shaft, which proceeding from the pot foot (6) up to the cover (8) is guided through a wall (15) of the pot (5) and/or a handle (16) of the pot (5).

4. The preparation vessel (1) according to one of the preceding claims, **characterized in that** locking element (10) has at least one active element (17), which as the locking element (10) rotates is designed to induce an axial displacement of the cover (8) toward the pot (5) and/or a tensioning of the cover (8) acting radially to the outside.

5. The preparation vessel (1) according to claim 4, **characterized in that** the active element (17) is able to engage into a corresponding opening of the cover (8) or pot (5) to form a bayonet lock, wherein the active element (17) or a partial area of the cover (8) or pot (5) has a ramp (18) that ascends in the locking rotational direction, and induces an axial displacement of the cover (8) relative to the pot (5), and thus a locking of the pot (5) with the cover (8).

6. The preparation vessel (1) according to claim 4, **characterized in that** the pot (5) or cover (8) has an intermediate element (19) movably mounted on the pot (5) or cover (8), wherein the active element (17) of the locking element (10) is designed to press the intermediate element (19) in an axial and/or radial direction against a partial area of the cover (8) or pot (5) during a rotation of the locking element (10), and thereby induce a locking of the pot (5) with the cover (8).

7. The preparation vessel (1) according to one of the preceding claims, **characterized by** a guiderail (20) arranged on the pot (5) with an engaging element (22) mounted in a spiral guideway (21) of the guiderail (20), wherein the guideway (21) runs around a spiral axis (23) that faces radially outward in relation to an interior of the pot (5), and wherein a rotation of the locking element (10) produces an axial and radial displacement of the engaging element (22) along the spiral guideway (21) toward a partial area of the cover (8), until a partial area (43) of the engaging element (22) facing out of the guiderail (20) abuts against the cover (8), thereby bringing about a locking of the pot (5) with the cover (8).

8. An electric motor-driven food processor (4), in particular a mixing device, with a base unit (3) and a preparation vessel (1), which can be connected with a receiving area (2) of the base unit (3), and has a pot (5) and a cover (8) that closes a pot opening (7), **characterized in that** the preparation vessel (1) is designed according to one of the preceding claims, and the base unit (3) has an activating assembly (12), which is set up to activate the locking assembly (9) of the preparation vessel (1) with the base unit (3) and preparation vessel (1) connected with each other.

9. The food processor (4) according to claim 8, **characterized by** a safety device (24) for locking the preparation vessel (1) on the base unit (3) of the food processor (4), wherein the safety device (24) has a safety element (25) movably mounted on the preparation vessel (1), which can be moved behind an undercut (26) of the base unit (3), or a safety element (25) movably mounted on the base unit (3), which can be moved behind an undercut (26) of the preparation vessel (1), wherein the activating assembly (12) of the base unit (3) is designed to also drive the safety element (25) of the safety device (24) simultaneously and additionally to activating the locking assembly (9).

## Revendications

1. Récipient de préparation (1) à relier à une zone de réception (2) d'un appareil de base (3) d'un robot ménager (4) à moteur électrique, le récipient de préparation (1) présentant un pot (5), un pied de pot (6) pouvant être relié à la zone de réception (2) et un couvercle (8) fermant une ouverture de pot (7) du pot (5), le récipient de préparation (1) présentant en outre un dispositif de verrouillage (9) avec un élément de verrouillage (10) pour verrouiller le pot (5) avec le couvercle (8), le pied de pot (6) présentant au moins un élément d'actionnement (11) pour actionner le dispositif de verrouillage (9), l'élément d'actionnement (11) étant disposé sur le pied de pot (6) de telle sorte que celui-ci puisse être actionné par un dispositif d'actionnement correspondant (12) de la zone de réception (2) du robot ménager (4), **caractérisé en ce que** l'élément de verrouillage (10) est un élément monté rotatif sur le pot (5) ou le couvercle (8), l'ouverture du pot (7), dans un état fermé au moyen du couvercle (8), un dispositif d'entraînement (13) étant associé à l'élément de verrouillage (10), lequel est conçu pour faire tourner l'élément de verrouillage (10) autour de l'ouverture du pot (7).

2. Récipient de préparation (1) selon la revendication 1, **caractérisé en ce que** le dispositif de verrouillage (9) présente un dispositif d'entraînement (13) qui entraîne l'élément de verrouillage (10) et qui est en liaison active mécanique avec l'élément d'actionnement (11).

3. Récipient de préparation (1) selon la revendication 2, **caractérisé en ce que** le dispositif d'entraînement (13) présente un élément d'entraînement (14), en particulier un arbre de rotation, qui est guidé à travers une paroi (15) du pot (5) et/ou une poignée (16) du pot (5) en partant du pied du pot (6) jusqu'à le couvercle (8).

4. Récipient de préparation (1) selon l'une des revendications précédentes, **caractérisé en ce que** l'élément de verrouillage (10) présente au moins un élément d'action (17) qui est conçu pour provoquer, lors de la rotation de l'élément de verrouillage (10), un déplacement axial du couvercle (8) vers le pot (5) et/ou un serrage du couvercle (8) agissant radialement vers l'extérieur.

5. Récipient de préparation (1) selon la revendication 4, **caractérisé en ce que** l'élément actif (17) peut être engagé dans une ouverture correspondante du couvercle (8) ou du pot (5) pour former une fermeture à baïonnette, l'élément actif (17) ou une zone partielle du couvercle (8) ou du pot (5) présentant une rampe (18) ascendante dans le sens de rotation de verrouillage, qui provoque un déplacement axial du couvercle (8) par rapport au pot (5) et donc un verrouillage du pot (5) avec le couvercle (8).

6. Récipient de préparation (1) selon la revendication 4, **caractérisé en ce que** le pot (5) ou le couvercle (8) comporte un élément intermédiaire (19), monté mobile sur le pot (5) ou le couvercle (8) l'élément d'action (17) de l'élément de verrouillage (10) étant conçu pour presser l'élément intermédiaire (19) contre une zone partielle du couvercle (8) ou du pot (5) lors de la rotation de l'élément de verrouillage (10) dans la direction axiale et/ou ou radiale et pour provoquer ainsi un verrouillage du pot (5) avec le couvercle (8).

7. Récipient de préparation (1) selon l'une des revendications précédentes, **caractérisé par** une coulisse de guidage (20) disposée sur le pot (5) avec un élément d'engagement (22) logé dans une voie de guidage (21) en forme de spirale de la coulisse de guidage (20), la voie de guidage (21) s'étendant autour d'un axe de spirale (23) orienté radialement vers l'extérieur par rapport à un intérieur du pot (5), et une rotation de l'élément de verrouillage (10) provoquant un déplacement axial et radial de l'élément d'engagement (22) le long de la glissière de guidage (21) en forme de spirale vers une zone partielle du couvercle (8) jusqu'à ce qu'une zone partielle (43) de l'élément d'engagement (22) sortant de la coulisse de guidage (20) s'applique contre le couvercle (8) et qu'un verrouillage du pot (5) avec le couvercle (8) soit ainsi provoqué.

8. Robot ménager (4) actionné par un moteur électrique, en particulier mixeur, avec un appareil de base (3) et un récipient de préparation (1) pouvant être relié à une zone de réception (2) de l'appareil de base (3), lequel récipient présente un pot (5) et un couvercle (8) fermant une ouverture du pot (7), **caractérisé en ce que** le récipient de préparation (1) présente une ouverture du pot (7), **en ce que** le récipient de préparation (1) est réalisé selon l'une des revendications précédentes et **en ce que** l'appareil de base (3) présente un dispositif d'actionnement (12) qui est conçu pour actionner le dispositif de verrouillage (9) du récipient de préparation (1) lorsque l'appareil de base (3) et le récipient de préparation (1) sont reliés entre eux.

9. Robot ménager (4) selon la revendication 8, **caractérisé par** un dispositif de sécurité (24) pour le verrouillage du récipient de préparation (1) sur l'appareil de base (3) du robot ménager (4), le dispositif de sécurité (24) présentant un élément de sécurité (25) logé de manière mobile sur le récipient de préparation (1), lequel est mobile derrière une contre-dépouille (26) de l'appareil de base (3), ou un élément de sécurité (25) monté mobile sur l'appareil de base (3), qui est mobile derrière une contre-dépouille (26) du récipient de préparation (1), le dispositif d'actionnement (12) de l'appareil de base (3) étant conçu pour entraîner simultanément et en plus de l'actionnement du dispositif de verrouillage (9) également l'élément de sécurité (25) du dispositif de sécurité (24).
